# EUROPÄISCHE PATENTANMELDUNG

(11) **EP 1 647 736 A2**
(43) Veröffentlichungstag der Anmeldung: **19.04.2006**
(21) Anmeldenummer: 05021465.9
(22) Anmeldetag: 30.09.2005
(51) Int. Cl.: F16H 3/66, F16H 37/04

(54) **Lastschaltgetriebe für Kraftfahrzeuge, ein Kraftfahrzeug-Getriebe sowie einen Kraftfahrzeug-Antriebsstrang**

(30) Priorität: 12.10.2004 US 617863 P
(71) Anmelder: LuK Lamellen und Kupplungsbau Beteiligungs KG, 77815 Bühl (DE)
(72) Erfinder: Hemphill, Jeffrey, 44321 Copley, Ohio (US); George, Philip, OH 44691 Wooster (US); Brees, William, 44107 Lakewood (US); Huseby, Geir, 3320 Vestfossen (NO); Friedmann, Oswald, 77839 Lichtenau (DE)

(57) **Zusammenfassung**

Betrifft ein Lastschaltgetriebe für Kraftfahrzeuge mit einem ersten Teilgetriebe (14), das ein (erstes) Planetengetriebe (28) aufweist, wobei dieses erste Planetengetriebe (28) wenigstens ein Sonnenrad (56,58), wenigstens ein Hohlrad (32), mehrere Planetenräder (60,62) und wenigstens einen Planetenträger (64) aufweist, wobei ferner dieses wenigstens eine Sonnenrad (56,58) eine Verzahnung für den Eingriff in Verzahnungen von Planetenrädern (60,62) aufweist, und mit mehreren Gangkupplungen für das Ein- und Auslegen von Gängen im ersten Teilgetriebe (14), und mit einem zweiten Teilgetriebe (16), und mit mehreren Gangkupplungen für das Ein- und Auslegen von Gängen im zweiten Teilgetriebe (16), wobei das zweite Teilgetriebe (16) parallel zum ersten Teilgetriebe (14) geschaltet ist und wobei zumindest sämtliche Gangkupplungen für das Ein- und Auslegen von Gängen im ersten Teilgetriebe (14) radial außerhalb dieser Verzahnung des wenigstens einen Sonnenrades dieses ersten Teilgetriebes (14) angeordnet sind, sowie Kraftfahrzeug-Getriebe und einen Kraftfahrzeug-Antriebsstrang.

## Beschreibung

### Hintergrund der Erfindung

Die Erfindung betrifft Lastschaltgetriebe für Kraftfahrzeuge, ein Kraftfahrzeug-Getriebe sowie einen Kraftfahrzeug-Antriebsstrang.

Die überwiegende Mehrzahl bekannter Fahrzeuge bzw. Kraftfahrzeuge weist entweder manuelle Vorgelegegetriebe auf oder Automatengetriebe, die mit einem Planetengetriebe versehen sind. Ferner sind Lastschaltgetriebe, wie beispielsweise Parallelschaltgetriebe (PSG), bekannt, bei denen ein Vorgelegegetriebe mit zwei (Getriebe-)Eingangswellen mit einer (automatisierten) Betätigung kombiniert sind, um beispielsweise die den Schaltkomfort zu verbessern und den Kraftstoffverbrauch ökonomischer zu gestalten.

Bei derartigen Lastschaltgetrieben bzw. Parallelschaltgetrieben (PSG) sind die schaltbaren Gänge auf (i.d.R. zwei) parallel geschaltete Teilgetriebe verteilt, die jeweils eine Getriebeeingangswelle aufweisen. Lastschaltgetriebe bzw. Parallelschaltgetriebe (PSG) ermöglichen ein zugkraftunterbrechungsfreies Schalten zwischen Gängen. Insbesondere zu diesem Zweck ist bei den bekannten Gestaltungen jedes der parallelgeschalteten Teilgetriebe eingangsseitig über eine separate Kupplung bzw. Reibungskupplung mit der Motorausgangswelle der Brennkraftmaschine gekoppelt. Wenn die eine dieser Kupplungen geöffnet ist, kann in dem zugehörigen Teilgetriebe ein Zielgang eingelegt werden, während gleichzeitig über das andere Teilgetriebe Drehmoment von der Brennkraftmaschine in Richtung der Kraftfahrzeug-Antreibsachsen übertragen werden kann, wobei die diesem Teilgetriebe zugeordnete Kupplung zur Brennkraftmaschine geschlossen ist, und umgekehrt. Durch gesteuertes Schließen der zunächst offenen Kupplung und Öffnen der zu nächst geschlossenen Kupplung kann von dem jeweiligen Ausgangsgang eines dieser Teilgetriebe in einen Zielgang des jeweils anderen Teilgetriebes umgeschaltet werden, wobei bei diesem Umschalten das Öffnen und Schließen der Kupplungen derart überlappend stattfindet, dass während des gesamten Umschaltvorgangs Drehmoment von der Brennkraftmaschine an die Antriebsachse übertragen wird.

Aus der EP 1422442 A, der EP 1422443 A, der EP 1422444 A und der EP 1422446 A sind ferner Kraftfahrzeuggetriebe bekannt, die zwei parallel geschaltete Teilgetriebe aufweisen und bei denen in jedem dieser Teilgetriebe ein Planetengetriebe vorgesehen ist.

### Aufgabe der Erfindung

Der Erfindung liegt die Aufgabe zugrunde ein wettbewerbsfähiges, kostengünstiges Lastschaltgetriebe zu schaffen, das betriebssicher ist.

Gemäß einem weiteren Aspekt liegt der Erfindung die Aufgabe zugrunde, ein Lastschaltgetriebe zu schaffen, dass betriebssicher und kostengünstig herstellbar ist, und dennoch ein geringes Gewicht aufweist.

Gemäß einem weiteren Aspekt liegt der Erfindung die Aufgabe zugrunde, ein Lastschaltgetriebe zu schaffen, dass baulich kompakt gestaltet ist bzw. sich zumindest baulich kompakt gestalten lässt.

Gemäß einem weiteren Aspekt liegt der Erfindung die Aufgabe zugrunde, ein Lastschaltgetriebe zu schaffen, dass einem geringen Kraftstoffverbrauch von Kraftfahrzeugen förderlich ist.

Gemäß einem weiteren Aspekt liegt der Erfindung die Aufgabe zugrunde, ein Lastschaltgetriebe zu schaffen, dass sich auf einfache bzw. baulich einfache Weise betätigen lässt.

Gemäß einem weiteren Aspekt liegt der Erfindung die Aufgabe zugrunde, ein Lastschaltgetriebe zu schaffen, dass sich gut an Bauraumanforderungen anpassen lässt.

### kurze Darstellung der Erfindung

Erfindungsgemäß wird ein Lastschaltgetriebe gemäß Anspruch 1 oder gemäß Anspruch 6 oder gemäß Anspruch 17 oder gemäß Anspruch 18 oder gemäß Anspruch 21. Ein erfindungsgemäßes Kraftfahrzeug-Getriebe ist Gegenstand des Anspruchs 22. Ein erfindungsgemäßer Kraftfahrzeug-Antriebsstrang ist Gegenstand des Anspruchs 28.

Erfindungsgemäß wird insbesondere ein Lastschaltgetriebe für Kraftfahrzeuge vorgeschlagen, wobei dieses Lastschaltgetriebe ein erstes und ein zweites, zum ersten parallel geschaltetes Teilgetriebe aufweist. Das erste Teilgetriebe weist dabei ein (erstes) Planetengetriebe auf, wobei dieses erste Planetengetriebe wenigstens ein Sonnenrad, wenigstens ein Hohlrad, mehrere Planetenräder und wenigstens einen Planetenträger aufweist. Dieses wenigstens eine Sonnenrad weist eine Verzahnung für den Eingriff in Verzahnungen von Planetenrädern auf. Diese Verzahnung dieses Sonnenrades greift insbesondere in Verzahnungen von Planetenrädern ein. Es können auch mehrere Sonnenräder des ersten Planetengetriebes vorgesehen sein, wobei diese insbesondere mit verschiedenen, insbesondere jeweils mehreren Planetenrädern über ihrer Verzahnung im Eingriff stehen können. Ferner sind mehrere Gangkupplungen für das Ein- und Auslegen von Gängen im ersten Teilgetriebe vorgesehen und mehrere Gangkupplungen für das Ein- und Auslegen von Gängen im zweiten Teilgetriebe. Sämtliche Gangkupplungen für das Ein- und Auslegen von Gängen im ersten Teilgetriebe und / oder sämtliche Gangkupplungen für das Ein- und Auslegen von Gängen im zweiten Teilgetriebe sind radial außerhalb dieser Verzahnung des wenigstens einen Sonnenrades und / oder - sofern vorhanden - gegebenenfalls der Sonnenräder dieses ersten Teilgetriebes angeordnet.

Erfindungsgemäß wird ferner insbesondere ein Lastschaltgetriebe für Kraftfahrzeuge vorgeschlagen, wobei dieses Lastschaltgetriebe ein erstes und ein zweites, zum ersten parallel geschaltetes Teilgetriebe aufweist. Das erste Teilgetriebe weist dabei ein (erstes) Planetengetriebe auf. Ferner sind mehrere Gangkupplungen für das Ein- und Auslegen von Gängen im ersten Teilgetriebe vorgesehen und mehrere Gangkupplungen für das Ein- und Auslegen von Gängen im zweiten Teilgetriebe. Weiter ist eine Betätigungseinrichtung bzw. ein Aktor zum Betätigen dieser Gangkupplungen vorgesehen. Diese Betätigungseinrichtung bzw. dieser Aktor weist wenigstens ein hohl, vorzugsweise im Wesentlichen hohlzylindrisch, ausgebildetes erstes Bauteil auf, das beweglich, insbesondere drehbeweglich und besonders bevorzugt axial fest, gelagert ist und sich um das (erste) Planetengetriebe (des ersten Teilgetriebes) herum erstreckt, und zwar insbesondere radial außen.

Das wenigstens eine hohl ausgebildete erste Bauteil ist insbesondere zum Betätigen von Gangkupplungen , insbesondere sämtlicher Gangkupplungen, des ersten Planeten- bzw. Teilgetriebes vorgesehen, und / oder zum Betätigen von Synchronisationseinrichtungen solcher Gangkupplungen des ersten Planetengetriebes.

Das erste hohl Bauteil ist vorzugsweise ein Schaltwalze, und zwar besonders bevorzugt eine Schaltwalze, die für die Betätigung eine Profilierung, wie Anordnung von Nuten oder dergleichen, auf Ihrer (radialen) Innenoberfläche aufweist. Es kann auch vorgesehen sein, dass mehrere hohle erste Bauteile für das Betätigen der Gangkupplungen bzw. Synchronisiereinrichtungen, die besonders bevorzugt gegeben sind, des ersten Planetengetriebes vorgesehen sind. Beispielsweise können diese (mehrere) konzentrische Hydraulikzylinder sein, die zum Betätigen der Gangkupplungen bzw. Synchronisationseinrichtungen vorgesehen sind. Solche können beispielsweise auch für die Gangkupplungen bzw. Synchronisiereinrichtung des zweiten Teilgetriebes, das bevorzugt ebenfalls ein (zweites) Planetengetriebe aufweist, vorgesehen sein.

Erfindungsgemäß wird ferner insbesondere ein Lastschaltgetriebe für Kraftfahrzeuge vorgeschlagen, wobei dieses Lastschaltgetriebe ein erstes und ein zweites, insbesondere zum ersten parallel geschaltetes Teilgetriebe aufweist. Das zweite Teilgetriebe weist dabei ein (zweite) Planetengetriebe auf. Es kann auch vorgesehen sein, dass ferner das erste Teilgetriebe ein (erstes) Planetengetriebe aufweist. Ferner sind mehrere Gangkupplungen für das Ein- und Auslegen von Gängen im ersten Teilgetriebe vorgesehen und mehrere Gangkupplungen für das Ein- und Auslegen von Gängen im zweiten Teilgetriebe. Weiter ist eine Betätigungseinrichtung bzw. ein Aktor zum Betätigen dieser Gangkupplungen bzw. deren Synchronisationseinrichtungen vorgesehen. Diese Betätigungseinrichtung weist mehrere jeweils axial beweglich angeordnete (dritte) Bauteile, wie beispielsweise, insbesondere kleine, Hydraulikzylinder, auf, die in im Wesentlichen kreisförmiger Anordnung um das zweite Planetengetriebe herum angeordnet sind. Es kann auch vorgesehen sein, dass auch um das erste Teil- bzw. Planetengetriebe herum solche (dritten) Bauteile, wie Hydraulikzylinder, in im Wesentlichen kreisförmiger Anordnung angeordnet sind. Diese dritten Bauteile sind insbesondere für das Betätigen der Gangkupplungen bzw. deren Synchronisationseinrichtungen des ersten bzw. zweiten Teil- bzw. Plantetengetriebes vorgesehen. Die dritten Bauteile können auch so angeordnet sein, dass sich ihre Anordnung um das erste bzw. zweite Planetengetriebe herumerstreckt, ohne dabei in kreisförmiger Anordnung angeordnet zu sein. Diese dritten Bauteile bzw. ihre Axialrichtungen liegen vorzugsweise parallel zueinander.

Erfindungsgemäß wird ferner insbesondere ein Lastschaltgetriebe für Kraftfahrzeuge vorgeschlagen, wobei dieses Lastschaltgetriebe ein erstes und ein zweites, insbesondere zum ersten parallel geschaltetes Teilgetriebe aufweist. Das erste Teilgetriebe weist dabei ein (erstes) Planetengetriebe auf. Ferner sind mehrere Gangkupplungen für das Ein- und Auslegen von Gängen im ersten Teilgetriebe vorgesehen und mehrere Gangkupplungen für das Ein-und Auslegen von Gängen im zweiten Teilgetriebe. Weiter ist eine Betätigungseinrichtung bzw. ein Aktor zum Betätigen dieser Gangkupplungen vorgesehen. Diese Betätigungseinrichtung weist einen Elektromotor auf, und zwar genau einen. Mittels dieses einen Elektromotors können sämtliche Gangkupplungen für das Ein- und Auslegen von Gängen im ersten Teilgetriebe und im zweiten Teilgetriebe betätigt werden.

Erfindungsgemäß wird ferner insbesondere ein Lastschaltgetriebe für Kraftfahrzeuge vorgeschlagen, wobei dieses Lastschaltgetriebe ein erstes und ein zweites, zum ersten parallel geschaltetes Teilgetriebe aufweist. Das erste Teilgetriebe weist dabei ein (erstes) Planetengetriebe auf und das zweite Teilgetriebe weist ein (zweites) Planetengetriebe auf. Ein Hohlrad des ersten Planetengetriebes ist mit einem Hohlrad des zweiten Planetengetriebes drehfest verbunden. Diese Verbindung kann beispielsweise nicht-lösbar ausgebildet sein, oder so dass sie im Betrieb nicht-lösbar ist, wie es beispielsweise mittels einer Verschraubung gegeben sein kann.

Im ersten und im zweiten Teilgetriebe bzw. Planetengetriebe können jeweils insbesondere Gänge geschaltet werden. Das erste und / oder zweite Planetengetriebe kann beispielsweise ein Ravigneaux-Getriebe oder ein Simpson-Getriebe sein.

Bevorzugt weisen das erste und das zweite Teilgetriebe jeweils ein Planetengetriebe auf. Besonders bevorzugt sind die ― insbesondere alle - Gangkupplungen als synchronisierte Kupplungen bzw. als Kupplungen mit einer jeweiligen Synchronisationseinrichtung ausgebildet, insbesondere als synchronisierte Klauenkupplungen bzw. als Klauenkupplung mit jeweiliger Synchronisationseinrichtung.

Besonders bevorzugt sind die bzw. sämtliche Synchronisationseinrichtungen der Gangkupplungen des ersten Teil- bzw. Planetengetriebes radial außerhalb der Verzahnung (für den Eingriff in Verzahnungen von Planetenrädern) wenigstens eines bzw. des Sonnenrades dieses ersten Planetengetriebes angeordnet. Bevorzugt ist auch ― sofern das erste Planetengetriebe mehrere Sonnenräder aufweist -, dass die bzw. sämtliche Synchronisationseinrichtungen der Gangkupplungen des ersten Teil- bzw. Planetengetriebes radial außerhalb sämtlicher Verzahnungen (für den Eingriff Verzahnungen von Planetenrädern) dieser Sonnenräder des ersten Planetengetriebes angeordnet sind.

Besonders bevorzugt sind die bzw. sämtliche Synchronisationseinrichtungen der Gangkupplungen des zweiten Teil- bzw. Planetengetriebes radial außerhalb der Verzahnung (für den Eingriff in Verzahnungen von Planetenrädern) wenigstens eines bzw. des Sonnenrades dieses zweiten Planetengetriebes angeordnet. Bevorzugt ist auch - sofern das zweite Planetengetriebe mehrere Sonnenräder aufweist - dass die bzw. sämtliche Synchronisationseinrichtungen der Gangkupplungen des zweiten Teil- bzw. Planetengetriebes radial außerhalb sämtlicher Verzahnungen (für den Eingriff in Verzahnungen von Planetenrädern) dieser Sonnenräder des zweiten Planetengetriebes angeordnet sind.

Gemäß einer besonders bevorzugten Gestaltung ist vorgesehen, dass die bzw. sämtliche Synchronisationseinrichtungen der Gangkupplungen des ersten Teil- bzw. Planetengetriebes radial außerhalb der Verzahnung(en) (für den Eingriff in Verzahnungen von Planetenrädern) wenigstens eines bzw. des bzw. sämtlicher Hohlräder dieses ersten Planetengetriebes angeordnet sind.

Vorzugsweise beziehen sich diese Anordnungen der Synchronisationseinrichtung jeweils auf die Abschnitt bzw. Oberflächenbereiche, die währen einer Synchronisation einander Kontaktieren, allerdings außerhalb einer Synchronisation voneinander entfernt werden können.

Erfindungsgemäß ist ferner insbesondere ein Kraftfahrzeug-Getriebe vorgesehen, das mehrere Radsätzen zur Bildung von Gängen aufweist, sowie mehrere Gangkupplungen für das Ein- und Auslegen von Gängen und eine als Kupplung wirkende Drehmomentübertragungseinrichtung, wobei diese wobei diese Drehmomentübertragungseinrichtung von einem Planetengetriebe und einer mit diesem Planetengetriebe zusammenwirkenden Bremseinrichtung gebildet wird.

Es kann vorgesehen sein, dass dieses Planetengetriebe Bestandteil eines Radsatzes zur Bildung eines Ganges ist, oder das dieses Planetengetriebe von diesen Radsätzen zur Bildung von Gängen verschieden ist.

Erfindungsgemäß ist ferner insbesondere ein Kraftfahrzeug-Antriebsstrang vorgesehen, der eine von einer Brennkraftmaschine antreibbare Motorausgangswelle bzw. Kurbelwelle und wenigstens eine Antriebsachse sowie eine zwischen dieser Motorausgangswelle und dieser Antriebsachse angeordnete Getriebeeinrichtung aufweist, mittels welcher die Übersetzung zwischen dieser Motorausgangswelle und dieser Antriebsachse veränderbar ist, wobei die Getriebeeinrichtung gemäß einer der erfindungsgemäßen Gestaltungen ausgebildet ist.

Das erfindungsgemäße Lastschaltgetriebe wird vorzugsweise automatisiert gesteuert, und zwar insbesondere mittels eines elektronischen Steuergeräts. Das erfindungsgemäße Lastschaltgetriebe ist bevorzugt ein Elektronisches Schaltgetriebe (ESG) oder ein Doppelkupplungsgetriebe (DKG) oder ein Parallelschaltgetriebe (PSG).

Die Anmelderin behält sich vor, die Rückbezüge in den Unteransprüchen jeweils in "nach einem der vorangehenden Ansprüche" zu ändern, da die sich hieraus ergebenden Gestaltungen besonders bevorzugt sind. Insbesondere auch unter Berücksichtigung des Vorgesagten sind ferner insbesondere Gestaltungen bevorzugt, die sich aus der Kombination des jeweiligen kennzeichnenden Teil eines oder mehrerer Unteransprüche mit den Merkmalen eines oder mehrerer der Ansprüche 1, 6, 18, 19 und 23 ergeben. Auch die Gestaltungen, die sich als Kombination mehrerer (beliebiger) der unabhängigen Ansprüche ergeben sind bevorzugt. Insbesondere auch die vorgenannten Gestaltungen können auch durch einzelne oder mehrere Merkmale gemäß der Beschreibung oder gemäß den Fig. weitergebildet sein. Die Anmelderin behält sich insbesondere vor, Patentansprüche auch auf derartige sich aus diesen vorgenannte Kombinationen ergebende Gestaltungen zu richten.

Im Folgenden sollen nun Ausführungsbeispiele der Erfindung anhand der Figuren näher erläutert werden, wobei anzumerken ist, dass der die Erfindung nicht auf diese Ausführungsbeispiele beschränkt ist. Es zeigt:

### Kurze Beschreibung der Figuren

Fig. 1 einen beispielhaften erfindungsgemäßen Kraftfahrzeug-Antriebsstrang mit einem beispielhaften erfindungsgemäßen Lastschaltgetriebe in schematischer Darstellung;
Fig. 2 einen vergrößerten Ausschnitt aus Fig. 1 im Bereich der Planetengetriebe und der Betätigungseinrichtung;
Fig. 3 das Nut-Profil auf der Innenoberfläche (über 180° der Umfangsrichtung) der ersten und zweiten Schaltwalze aus Fig. 2 in abgerollter Form in schematischer Darstellung;
Fig. 4 einen vergrößerten Ausschnitt aus Fig. 1 im Bereich der Betätigungseinrichtung;
Fig. 5 eine Schnittansicht aus Fig. 2;
Fig. 6 einen vergrößerten Ausschnitt aus Fig. 1 bzw. Fig. 2 im Bereich von Synchronisiereinrichtungen;
Fig. 7 einen vergrößerten Ausschnitt aus Fig. 1 im Bereich des Differentials;
Fig. 8a eine "normale Synchronisationseinrichtung" in beispielhafter schematischer Darstellung;
Fig. 8b eine erfindungsgemäße Synchronisationseinrichtung für ein Planetengetriebe, die beispielsweise auch in der Gestaltung gemäß Fig. 1 bis 7 oder gemäß Fig. 9 oder gemäß Fig. 10 für das Schalten und / oder Synchronisieren der dortigen Sonnenräder und / oder Planetenträger gegeben sein kann;
Fig. 8c eine weitere erfindungsgemäße Synchronisationseinrichtung für ein Planetengetriebe, die beispielsweise auch in der Gestaltung gemäß Fig. 1 bis 7 oder gemäß Fig. 9 oder gemäß Fig. 10 für das Schalten und / oder Synchronisieren der dortigen Sonneräder und / oder Planetenträger gegeben sein kann, wobei auch bevorzugt ist, dass in diesen Gestaltung die Synchronisationseinrichtungen teilweise entsprechend der Gestaltung gemäß Fig. 8c ausgebildet sind und teilweise entsprechend der Gestaltung gemäß Fig. 8b;
Fig. 9 einen weiteren beispielhaften erfindungsgemäßen Kraftfahrzeug-Antriebsstrang mit einem beispielhaften erfindungsgemäßen Lastschaltgetriebe in schematischer Darstellung;
Fig. 10 einen weiteren beispielhaften erfindungsgemäßen Kraftfahrzeug-Antriebsstrang mit einem beispielhaften erfindungsgemäßen Lastschaltgetriebe in schematischer Darstellung;
Fig. 11 ein beispielhaften erfindungsgemäßen Kraftfahrzeug-Antriebsstrang mit einem beispielhaften erfindungsgemäßen Kraftfahrzeug-Getriebe in schematischer Darstellung;
Fig. 12 ein weiteren beispielhaften erfindungsgemäßen Kraftfahrzeug-Antriebsstrang mit einem weiteren beispielhaften erfindungsgemäßen Kraftfahrzeug-Getriebe in schematischer Darstellung;
Fig. 13 ein weiteren beispielhaften erfindungsgemäßen Kraftfahrzeug-Antriebsstrang mit einem weiteren beispielhaften erfindungsgemäßen Kraftfahrzeug-Getriebe in schematischer Darstellung; und
Fig. 14 ein weiteren beispielhaften erfindungsgemäßen Kraftfahrzeug-Antriebsstrang mit einem weiteren beispielhaften erfindungsgemäßen Kraftfahrzeug-Getriebe in schematischer Darstellung.

### Beschreibung weiterer bevorzugter Ausführungsformen

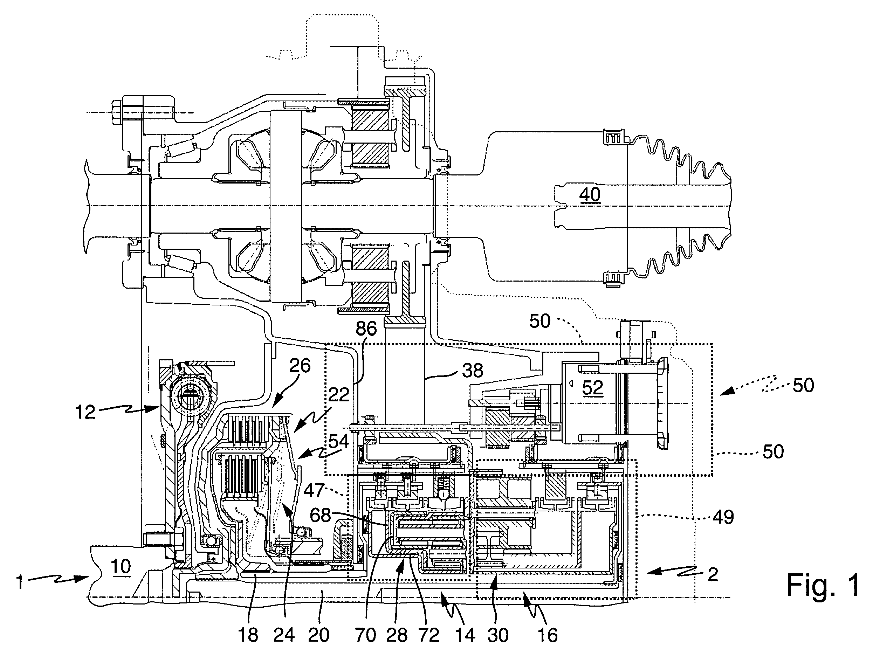

Fig. 1 zeigt einen beispielhaften erfindungsgemäßen Kraftfahrzeug-Antriebsstrang 1 in schematischer Darstellung mit einem beispielhaften erfindungsgemäßen Lastschaltgetriebe 2 in schematischer Darstellung.

Der Kraftfahrzeug-Antriebsstrang 1 weist eine Motorausgangswelle 10 auf, die einer nicht dargestellten Brennkraftmaschine zugeordnet ist und von dieser angetrieben werden kann. Mit dieser Motorausgangswelle 10 ist ein Zweimassenschwungrad (ZMS) 12 gekoppelt. Abtriebsseitig des Zweimassenschwungrades 12, also auf der der Brennkraftmaschine abgewandten Seite, ist das Lastschaltgetriebe 2 im Antriebsstrang angeordnet.

Das Lastschaltgetriebe 2 weist ein erstes Teilgetriebe 14 sowie ein zweites Teilgetriebe 16 auf. Das erste Teilgetriebe 14 weist eine erste Getriebeeingangswelle 18 auf, die hier als Hohlwelle gestaltet ist. Das zweite Teilgetriebe 16 weist eine zweite Getriebeeingangswelle 20 auf, um welche sich radial außen die erste Getriebeeingangswelle 18 erstreckt. Zwischen der Motorausgangswelle 10 bzw. dem Zweimassenschwungrad 12 und den beiden Getriebeeingangswellen 18, 20 ist eine Doppelkupplung 22 vorgesehen. Die Doppelkupplung 22 weist eine erste Kupplung 24 auf, sowie eine zweite Kupplung 26. Diese beiden Kupplungen 24, 26 sind in diesem Ausführungsbeispiel jeweils als Lamellenkupplung gestaltet, können aber auch anders gestaltet sein, wobei sie insbesondere als Reibungskupplung ausgebildet sind. Die erste Kupplung 24 ist mit der ersten Getriebeeingangswelle 18 gekoppelt und die zweite Kupplung 26 ist mit der zweiten Getriebeeingangswelle 20 gekoppelt. Ferner sind diese beiden Kupplungen 24, 26 mit dem Zweimassenschwungrad 12 bzw. der Motorausgangswelle 10 gekoppelt. Mittels diesen Kupplungen 24, 26, die auch als Anfahrt- bzw. Lastschaltkupplung bezeichnet werden können, können wahlweise die Teilgetriebe 14, 16 in den Drehmomentfluss geschaltet werden. Überdies kann mittels dieser Doppelkupplung 22 zugkraftunterbrechungsfrei zwischen Gängen der beiden Teilgetriebe 14, 16 gewechselt werden.

Das erste Teilgetriebe 14 ist parallel geschaltet zum zweiten Teilgetriebe 16. Das erste Teilgetriebe 14 weist ein erstes Planetengetriebe 28 auf, und das zweite Teilgetriebe 16 weist ein zweites Planetengetriebe 30 auf. Das erste Planetengetriebe 28 ist auf der ersten Getriebeeingangswelle 18 angeordnet und das zweite Planetengetriebe 30 ist auf der zweiten Getriebeeingangswelle 20 angeordnet.

Im Ausführungsbeispiel gemäß Fig. 1 sind das erste Planetengetriebe 28 sowie das zweite Planetengetriebe 30 jeweils als Ravigneaux-Getriebe gestaltet.

Das Hohlrad 32 des ersten Planetengetriebes 28 ist mit dem Hohlrad 34 des zweiten Planetengetriebes 30 fest verbunden.

Ein gemeinsamer Fortsatz 36 der Hohlräder 32, 34 weist einen Zahnkranz bzw. Zahnrad auf, in welchen bzw. welches eine Übertragungskette bzw. Kette 38 eingreift, um eine Drehmomentverbindung in Richtung der Antriebsachse bzw. Antriebsachsen 40 zu bilden.

Dieser eine Zahnkranz bzw. dieses Zahnrad ist mit dem Ausgang beider Radsätze 43, 45, also des Radsatzes 43 des ersten Planetengetriebes 28 und des Radsatzes 45 des zweiten Planetengetriebes 30, verbunden. Es ist insbesondere vorgesehen, dass mittels des Planetenradsatzes 43 die geraden Gänge und der Rückwärtsgang geschaltet werden kann (vgl. gepunkteter Bereich 47 mit dem Radsatz 43 für die geraden Gänge), und mittels des Planetenradsatzes 45 die ungeraden Gänge (vgl. gepunkteter Bereich 49 mit dem Radsatz 45 für die ungeraden Gänge).

Die Kette 38 greift ferner in einen Radsatz 42 ein, der ausgangsseitig mit einem Differential 44 gekoppelt ist. Ausgangsseitig des Differentials 44 sind Antriebsachsen 40 vorgesehen.

Der Radsatz 42 ist hier als Planetengetriebe ausgebildet, wobei das Sonnenrad 46 dieses Planetengetriebes den Eingang bildet, welcher von der Kette 38 antreibbar ist, und wobei der Planetenträger 48 den Ausgang dieses Radsatzes 42 bildet, der in das Differential eingreift.

Ferner ist ein Betätigungssystem bzw. eine Betätigungseinrichtung 50 für das Lastschaltgetriebe 2 vorgesehen. Diese Betätigungseinrichtung 50 weist genau einen Elektromotor 52 auf, mittels welchem Gänge des ersten Teilgetriebes 14 sowie des zweiten Teilgetriebes 16 ein-und ausgelegt werden können. Der Elektromotor ist in entgegengesetzten Richtungen antreibbar.

Zur Betätigung der Doppelkupplung 22 ist eine schematisch angedeutete Betätigungseinrichtung 54 vorgesehen, mittels welcher die beiden Kupplungen 24, 26 der Doppelkupplung 22 betätigt werden können, also insbesondere geöffnet und geschlossen werden können. Die Betätigungseinrichtung 54 zum Betätigen der Doppelkupplung 22 kann beispielsweise einen oder zwei Elektromotoren aufweisen. Es kann vorgesehen sein, dass die Elektromotoren einer solchen Betätigungseinrichtung 54 für die Doppelkupplung 22 und/oder der Elektromotor 52 der Betätigungseinrichtung 50 für das Lastschaltgetriebe bzw. die Planetengetriebe 28, 30 des Lastschaltgetriebes von einem elektronischen Steuergerät angesteuert werden.

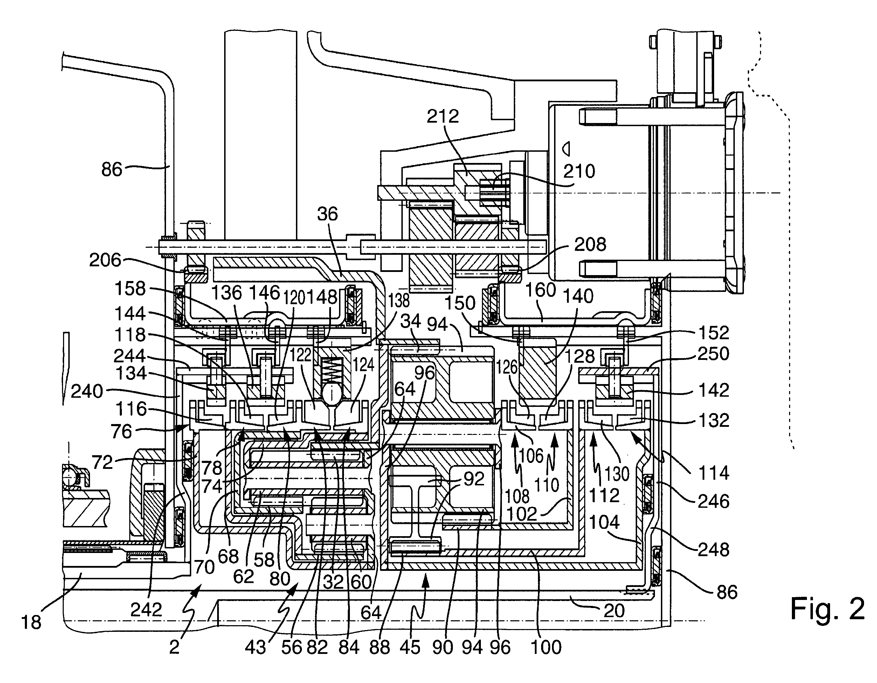

Fig. 2 zeigt einen vergrößerten Ausschnitt aus Fig. 1 im Bereich des ersten 14 sowie des zweiten Teilgetriebes 16. In Fig. 2 ist auch die Betätigungseinrichtung 50 für das Betätigen dieser beiden Teilgetriebe vergrößert gezeigt.

Das erste Planetengetriebe 28 weist ein kleines Sonnenrad 56 auf, sowie ein großes Sonnenrad 58, kurze Planetenräder 60, lange Planetenräder 62, einen Planetenträger 64 und ein Hohlrad 32. Von den kurzen Planetenrädern 60 sowie von den langen Planetenrädern 62 ist in Fig. 1 bzw. in Fig. 2 jeweils eines gezeigt. Von diesen sind allerdings mehrere über den Umfang verteilt vorgesehen, wie beispielsweise jeweils drei oder jeweils vier oder jeweils fünf.

Das kleine Sonnenrad 56 weist einen Fortsatz 68 auf. Ferner weist das große Sonnenrad 58 einen Fortsatz 70 auf. Überdies weist der Planetenträger 64 einen ersten Fortsatz 72 sowie einen zweiten Fortsatz 74 auf.

Ferner sind zum Ein- und Auslegen der Gänge des ersten Teilgetriebes 14 bzw. Planetengetriebes 28 Gangkupplungen 76, 78, 80, 82, 84 vorgesehen. Diese Gangkupplungen 76, 78, 80, 82, 84 sind vorzugsweise als formschlüssige Kupplungen, wie beispielsweise Klauenkupplungen oder von Zahnkränzen gebildete Kupplungen, ausgebildet. Mittels eines Teils 76, 78, 80 dieser Gangkupplungen 76, 78, 80, 82, 84 kann die erste Getriebeeinheitswelle 18 drehfest mit jeweils einem bzw. zwei der Fortsätze 68, 70, 72 drehfest gekoppelt werden. Mittels eines anderen Teils 82, 84 dieser Gangkupplungen 76, 78, 80, 82, 84 kann ein jeweiliger der Fortsätze 70, 74 gegenüber dem Gehäuse 86 festgelegt werden. Dabei ist in der Gestaltung gemäß Fig. 2 vorgesehen, dass jeweils zwei bzw. genau zwei dieser ― hier beispielhaft fünf - Gangkupplungen 76, 78, 80, 82, 84 in bestimmter Zuordnung geschlossen sein müssen, damit ein entsprechender Gang eingelegt ist.

In der Gestaltung gemäß Fig. 2, in der im ersten Teilgetriebe 14 bzw. im ersten Planetengetriebe 28 die geraden Gänge sowie der Rückwärtsgang geschaltet werden können, ist insbesondere vorgesehen, dass der zweite Gang eingelegt ist, wenn durch Schließen der Gangkupplung 78 die erste Getriebeeingangswelle 18 drehfest mit dem kleinen Sonnenrad 56 verbunden ist und durch Schließen der Gangkupplung 84 der Planetenträger 64 gegenüber dem Gehäuse 86 festgesetzt ist. Ferner ist bei dieser Gestaltung vorgesehen, dass der vierte Gang eingelegt ist, wenn durch Schließen der Gangkupplung 76 die erste Getriebeeingangswelle 18 drehfest mit dem Planetenträger 64 verbunden ist durch Schließen der Gangkupplung 78 die erste Getriebeeingangswelle 18 drehfest mit dem kleinen Sonnenrad 56 verbunden ist. Ferner ist bei der Gestaltung gemäß Fig. 2 vorgesehen, dass der sechste Gang eingelegt ist, wenn durch Schließen der Gangkupplung 76 die erste Getriebeeingangswelle 18 drehfest mit dem Planetenträger 64 verbunden ist und durch Schließen der Gangkupplung 82 das große Sonnenrad 58 gegenüber dem Gehäuse 86 festgesetzt ist. Weiter ist bei der Gestaltung gemäß Fig. 2 vorgesehen, dass der Rückwärtsgang eingelegt ist, wenn durch Schließen der Gangkupplung 80 die erste Getriebeeingangswelle 18 drehfest mit dem großen Sonnenrad 58 verbunden ist und durch Schließen der Gangkupplung 84 der Planetenträger 64 gegenüber dem Gehäuse 86 festgesetzt ist.

Das zweite Teilgetriebe 16 bzw. zweite Planetengetriebe 30 weist ein kleines Sonnenrad 88 auf sowie ein großes Sonnenrad 90, kurze Planetenräder 92, lange Planetenräder 94, einen Planetenträger 96 sowie ein Hohlrad 34. Von den kurzen Planetenrädern 92 sowie den langen Planetenrädern 94 sind mehrere - beispielsweise jeweils drei oder vier oder fünf - auf den Umfang verteilt vorgesehen. Der Planententräger 96 ist ein gemeinsamer Planetenträger für die kurzen Planetenräder 92 sowie die langen Planetenräder 94.

Das kleine Sonnenrad 88 weist einen Fortsatz 100 auf und das große Sonnenrad 90 weist einen Fortsatz 102 auf. Ferner weist der Planetenträger 96 einen ersten Fortsatz 104 sowie einen zweiten Fortsatz 106 auf. Wie der Fortsatz 106 zeigt, kann dieser Fortsatz 106 - und dies gilt grundsätzlich auch für die verbleibenden Fortsätze - Bestandteil einer Gangkupplung bzw. einer Synchronisationseinrichtung sein. Es kann aber auch vorgesehen sein, wie beispielsweise die Fortsätze 102, 100, 68, 70, 72, 74 zeigen, dass diese Fortsätze Wandabschnitte aufweisen, die sich radial erstrecken sowie Wandabschnitte, die sich im wesentlichen axial erstrecken. Insbesondere kann ein Fortsatz oder mehrere Fortsätze - wie Fig. 2 zeigt ― im Wesentlichen napfartig und / oder rotationssymmetrisch geformt sein, und zwar insbesondere mit einem zentral mittig angeordneten Durchbruch.

Für das Ein- und Auslegen von Gängen des zweiten Teilgetriebes 16 bzw. des zweiten Planetengetriebes 30 sind mehrere Gangkupplungen 108, 110, 112, 114 vorgesehen.

Mittels eines Teils dieser Gangkupplungen 108, 110, 112, 114, welche hier die Gangkupplungen 112, 114 sind, kann die zweite Getriebeeingangswelle 20 drehfest mit einem jeweiligen, zugeordneten der Fortsätze, hier dem Fortsatz 100 bzw. dem Fortsatz 104, verbunden werden. Mittels eines anderen Teils dieser Gangkupplungen, hier mittels der Gangkupplungen 108 bzw. 110, können vorbestimmte Fortsätze, hier die (alternativ) Fortsätze 102 bzw. 106, jeweils gegenüber dem Gehäuse 86 festgesetzt werden. Dies ist hier insbesondere so, dass mittels der Gangkupplung 108 der Planetenträger 96 gegenüber dem Gehäuse festgesetzt werden kann und mittels der Gangkupplung 110 das große Sonnenrad 90 gegenüber dem Gehäuse festgesetzt werden kann. Mittels der Gangkupplung 112 kann die zweite Getriebeeingangswelle 20 drehfest mit dem kleinen Sonnenrad 88 verbunden werden. Mittels der Gangkupplung 114 kann die zweite Getriebeeingangswelle 20 drehfest mit dem Planetenträger 96 verbunden werden. In diesem Zusammenhang sei allerdings angemerkt, dass auch alternativ vorgesehen sein kann, dass anstelle der drehfesten Kopplung der zweiten Getriebeeingangswelle 20 mit einem jeweils angesprochenen Teil des zweiten Planetengetriebes 30 mittels der jeweils angesprochenen Gangkupplung 112 bzw. 114 auch vorgesehen sein kann, dass "lediglich" eine Drehmomentverbindung erzeugt wird; es kann als beispielsweise vorgesehen sein, dass eine zusätzliche Zahnradstuffe zwischen der zweiten Getriebeeingangswelle 20 und dem jeweils angesprochenen Teil des zweiten Planetengetriebes 30 gegen ist. Entsprechendes gilt auch in Bezug auch die drehfesten Verbindungen, die - wie oben erwähnt - mittels Gangkupplungen 76, 78, 80 zwischen einem jeweiligen Teil des ersten Planetengetriebes 28 und der ersten Getriebeeingangswelle 18 erzeugt werden können; auch diese Verbindungen können alternativ "nur" Drehmomentverbindungen sein.

Mittels des zweiten Teilgetriebes 16 bzw. mittels des zweiten Planetengetriebes 30 lassen sich die ungeraden Gänge des Getriebes einlegen. Es ist hier vorgesehen, dass zum Einlegen eines jeden der ungeraden Gänge genau zwei Gangkupplungen geschlossen werden müssen.

Dies ist hier so, dass der erste Gang eingelegt ist, wenn durch Schließen der Gangkupplung 108 der Planetenträger 96 gegenüber dem Gehäuse 86 festgesetzt ist und wenn durch Schließen der Gangkupplung 112 die zweite Getriebeeingangswelle 20 drehfest mit dem kleinen Sonnenrad 88 verbunden ist. Der dritte Gang ist bei der Gestaltung gemäß Fig. 2 eingelegt, wenn durch Schließen der Gangkupplung 110 das große Sonnenrad 90 gegenüber dem Gehäuse 86 festgelegt ist und durch Schließen der Gangkupplung 112 die zweite Getriebeeingangswelle 20 drehfest mit dem kleinen Sonnenrad 88 verbunden ist. Der fünfte Gang ist bei der Gestaltung gemäß Fig. 2 eingelegt, wenn durch Schließen der Gangkupplung 110 das große Sonnenrad 90 gegenüber dem Gehäuse 86 festgelegt ist und durch Schließen der Gangkupplung 114 die zweite Getriebeeingangswelle 20 drehfest mit dem Planetenträger 96 verbunden ist.

Wie bereits angesprochen, ist bei der Gestaltung gemäß Fig. 2 vorgesehen, dass zum Einlegen eines geraden Ganges oder des Rückwärtsganges im ersten Teilgetriebe 14 bzw. im ersten Planetengetriebe 28 genau zwei Gangkupplungen geschlossen werden müssen, und zum Einlegen eines ungeraden Ganges im zweiten Teilgetriebe 16 bzw. im zweiten Planetengetriebe 30 genau zwei Gangkupplungen geschlossen werden müssen.

In Bezug auf das zweite Planetengetriebe 30 ist dabei vorgesehen, dass eine Gangkupplung 108 vorgesehen ist, die nur eingelegt geschlossen wird, wenn der kleinste (ungerade) Gang eingelegt werden soll (hier der erste Gang) und eine Gangkupplung 114 vorgesehen ist, die nur dann geschlossen wird, wenn der größte (ungerade) Gang, der hier der fünfte Gang ist, eingelegt werden soll. Die verbleibenden Gangkupplungen 110, 112, die dem zweiten Planetengetriebe 30 zugeordnet sind, sind jeweils zwei Gängen zugeordnet, so dass diese geschlossen werden, wenn der eine dieser Gänge oder der andere dieser Gänge eingelegt werden soll. Die Kombination der zum Einlegen eines Ganges geschlossenen Gangkupplungen ist dabei allerdings für jeden dieser ungeraden Gänge verschieden. In Bezug auf diese verbleibenden Gangkupplungen, also die, denen nicht der höchste und nicht der niedrigste (ungerade) Gang zugeordnet ist, ist vorgesehen, dass jeweils aufeinanderfolgenden Gängen die gleiche Gangkupplung zugeordnet ist. So ist in diesen Ausführungsbeispielen den aufeinanderfolgenden ungeraden Gängen "1" und "3" die Gangkupplung 112 zugeordnet und den aufeinanderfolgenden Gängen "3" und "5" die Gangkupplung 110 zugeordnet.

In entsprechender Weise ist in Bezug auf das erste Planetengetriebe 28 eine Gangkupplung 80 vorgesehen, die nur dann eingelegt ist, wenn der Rückwärtsgang (R) geschaltet werden soll und eine Gangkupplung 82 vorgesehen, die nur dann geschlossen wird, wenn der höchste (gerade) Gang ― hier der sechste Gang - eingelegt werden soll. Die verbleibenden Gangkupplungen 76, 78, 84 des ersten Planetengetriebes 28 sind jeweils zwei Gängen zugeordnet. Dabei ist vorgesehen, dass jeweils aufeinanderfolgenden Gängen jeweils eine gemeinsame Gangkupplung zugeordnet ist, wobei der Rückwärtsgang diesbezüglich als ein unterhalb des zweiten Ganges gelegener Gang bezeichnet wird.

Wie auch in Bezug auf das zweite Planetengetriebe 30 ist in Bezug auf das erste Planetengetriebe 28 die Kombination der beiden geschlossenen Gangkupplungen für jeden der einlegbaren Gänge verschieden. Das Vorgenannte wird in Bezug auf die Gangkupplungen des ersten Planetengetriebes 28 sowie des zweiten Planetengetriebes 30 auch durch die in der Nähe der dortigen Gangkupplungen eingetragenen Gangbezeichnungen verdeutlicht.

Es ist insbesondere vorgesehen, dass gleichzeitig im ersten Planetengetriebe 28 und im zweiten Planetengetriebe 30 ein Gang eingelegt sein kann. Dabei ist insbesondere vorgesehen, dass in jedem dieser beiden Planetengetriebe 28, 30 zeitgleich nur ein Gang eingelegt sein kann.

Die Gangkupplungen 76, 78, 80, 82, 84, 108, 110, 112, 114 sind jeweils synchronisierte Gangkupplungen bzw. Gangkupplungen, die mit Synchronisationseinrichtungen versehen sind. Diese Synchronisationseinrichtungen weisen jeweils einen Synchronisationsring 116, 118, 120, 122, 124, 126, 128, 130, 132 auf; diese Synchronisationsringe sind entsprechend der aus Fig. 2 erkennbaren Zuordnung den entsprechenden Gangkupplungen zugeordnet.

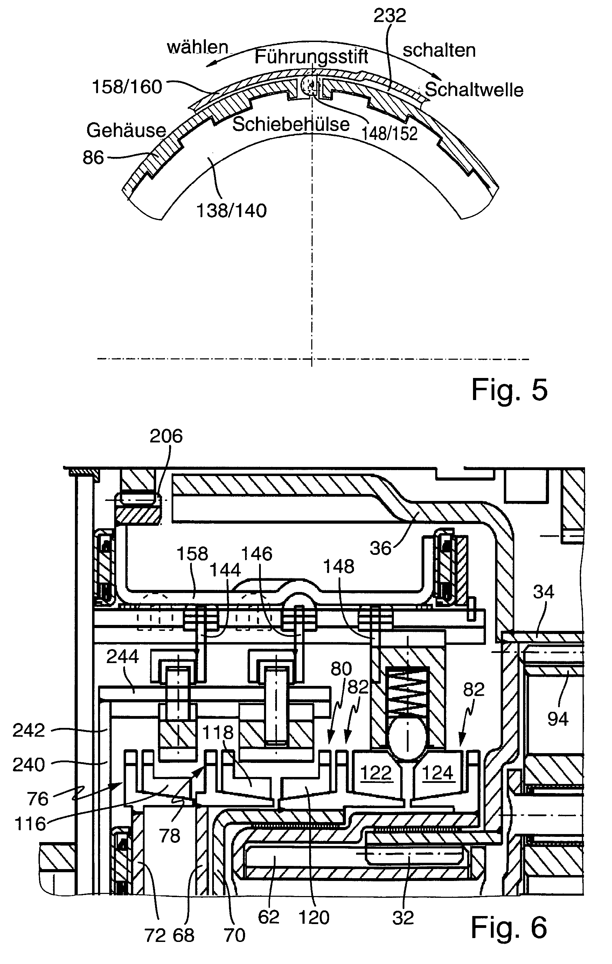

Ferner weisen die Gangkupplungen Schiebemuffen auf bzw. sind den Gangkupplungen Schiebemuffen 134, 136, 138, 140, 142 zugeordnet. Dies ist hier so, dass die Schiebemuffe 134 der Gangkupplung 76, die Schiebemuffe 136 den Gangkupplungen 78 und 80, die Schiebemuffe 138 den Gangkupplungen 82 und 84, die Schiebemuffe 140 den Gangkupplungen 108 und 110 und die Schiebemuffe 142 den Gangkupplungen 112 und 114 zugeordnet ist. Es ist insbesondere vorgesehen, dass die jeweilige Synchronisationsnabe, die insbesondere bei bekannten Synchronisationseinrichtungen insbesondere separat vorgesehen ist, und eine jeweilige Schiebemuffe vereint bzw. kombiniert sind, indem bzw. wobei das Drehmoment von außen bzw. von außerhalb der Schiebemuffe(n) aufgebracht bzw. eingeleitet wird. Dieses Drehmoment ist insbesondere das Drehmoment, welches von der Antriebsseite in die Synchronisationseinrichtung eingeleitet wird. Die Arretierung(en) für eine Vorsynchronisation sind im Vergleich zu bekannten Vorgelegewellen-Synchronisationseinrichtungen vereinfacht ausgebildet (insbesondere Fig. 6).

Es kann vorgesehen sein, dass die Gangkupplungen 76, 78, 80, 82, 84 mittels einer Zwangsführung betätigt werden. Eine solche Zwangsführung kann beispielsweise Bestandteil der Betätigungseinrichtung 50 sein bzw. an der Schnittstelle zwischen dieser Betätigungseinrichtung 50 und diesen Gangkupplungen 76, 78, 80, 82, 84 angeordnet sein. Dabei kann insbesondere vorgesehen sein, dass die Zwangsführung auf die Schiebemuffen 134, 136, 138 einwirkt. Dieses Einwirken kann so sein, dass die Schiebemuffen jeweils so betätigt werden, dass maximal bzw. zum Einlegen eines vorbestimmten Ganges genau zwei Schiebemuffen so geschaltet sind, dass die zugehörige Gangkupplung geschlossen ist. Ferner kann dabei vorgesehen sein, dass bei den entsprechenden Betätigungsvorgängen mittels der Zwangsführung die Schiebemuffen, die nicht dem entsprechend einzulegenden Gang zugeordnet sind, in eine Neutralstellung bewegt werden, also vollständig geöffnet sind. In entsprechender Weise kann eine Zwangsführung für die Betätigung der Gangkupplungen 108, 110, 112, 114 des zweiten Planetengetriebes 30 vorgesehen sein. Auch diese Zwangsführung kann beispielsweise so gestaltet sein, wie es zuvor in Bezug auf die Zwangsführung für die Gangkupplungen des ersten Planetengetriebes 28 erwähnt wurde. Bevorzugt ist insbesondere, dass die Zwangsführungen für das erste Planetengetriebe 28 und das zweite Planetengetriebe 30 unabhängig voneinander sind.

Bei der Gestaltung gemäß Fig. 2 weisen die Schiebemuffen 134, 136, 138, 140, 142 jeweils einen Stift bzw. Führungsstift 144, 146, 148, 150, 152 auf bzw. sind mit einem solchen verbunden. Diese Stifte 144, 146, 148, 150, 152 können beispielsweise einen Kopf aufweisen und/oder federbelastet sein. Beispielsweise kann auch vorgesehen sein, dass der Kopf gegenüber dem verbleibenden Stift federbelastet ist. Der Kopf bzw. der Stift oder ein Stiftende kann beispielsweise auch nach Art eines Freilaufelements ausgebildet sein bzw. im Zusammenwirken mit einem Bauteil, mit dem er zusammenwirken kann bzw. in welches er eingreifen kann, nach Art eines Freilaufes zumindest in bestimmten Stellungen zusammenwirken. Dieses Bauteil kann beispielsweise eine Schaltwalze sein; auf eine derartige Schaltwalze wird im Folgenden noch eingegangen.

Im Ausführungsbeispiel gemäß Fig. 2 ist eine erste Schaltwalze 158 für die Betätigung der bzw. sämtlicher Gangkupplungen bzw. der Schiebemuffen des ersten Planetengetriebes 28 vorgesehen und eine zweite Schaltwalze 160 für die Betätigung der bzw. sämtlicher Gangkupplungen bzw. der Schiebemuffen des zweiten Planetengetriebes 30.

Die Schaltwalzen 158, 160 sind also in diesem Ausführungsbeispiel als getrennte Bauteile gestaltet. Sie könnten alternativ allerdings auch als ein gemeinsames Bauteil ausgebildet sein. Im Ausführungsbeispiel gemäß Fig. 2 ist es insbesondere aus Bauraumgründen allerdings sinnvoll, diese beiden Schaltwalzen mit 158, 160 getrennt auszubilden, da der dortige Fortsatz 36 der Hohlräder 32, 34 axial zwischen diesen Schaltwalzen 158, 160 sich erstrecken kann bzw. dort radial nach außen verlaufen kann. Es kann auch eine andere Bauraumanordnung vorgesehen sein, wobei auch bei anderer Bauraumanordnung, also insbesondere, wenn der Fortsatz 36 nicht in genannter Weise geführt wird, vorgesehen sein, dass zwei separate Schaltwalzen 158, 160 für die beiden Planetengetriebe 28, 30 vorgesehen sind. Es kann beispielsweise auch vorgesehen sein, dass der - insbesondere gemeinsame - Antrieb - wie Elektromotor - dieser beiden Schaltwalzen 158, 160 von diesen jeweils entkoppelbar ist, wobei beispielsweise eine entsprechende Kupplung vorgesehen sein kann. Eine solche Kupplung oder ein ähnliches Bauteil kann insbesondere so sein, dass bewirkt werden kann, dass die Möglichkeit besteht, nur eine der Schaltwalzen zeitgleich zu betätigen. Gegebenenfalls kann auch eine Umschaltmöglichkeit gegeben sein, die ermöglicht, dass alternativ die eine oder die andere der Schaltwalzen 158, 160 mittels des Antriebs betätigt wird oder beide zeitgleich betätigt werden.

Die Schaltwalzen 158, 160 sind als Hohlkörper ausgebildet und weisen auf ihrer radial inneren Seite eine Profilierung auf. Diese Profilierung wird hier jeweils von einer Vielzahl von Nuten 162, 164, 166, 168, 170, 172, 174, 176, 178, 180, 182, 184, 186, 188, 190, 192, 194, 196 gebildet bzw. weist derartige Nuten auf. Die Nuten 162 bis 184 sind in mehreren axial beabstandeten Reihen über den Innenumfang der Schaltwalze 158 verteilt. Die Nuten 186 bis 196 sind in mehreren Reihen über den Innenumfang der Schaltwalze 160 in mehreren axial beabstandeten Reihen verteilt.

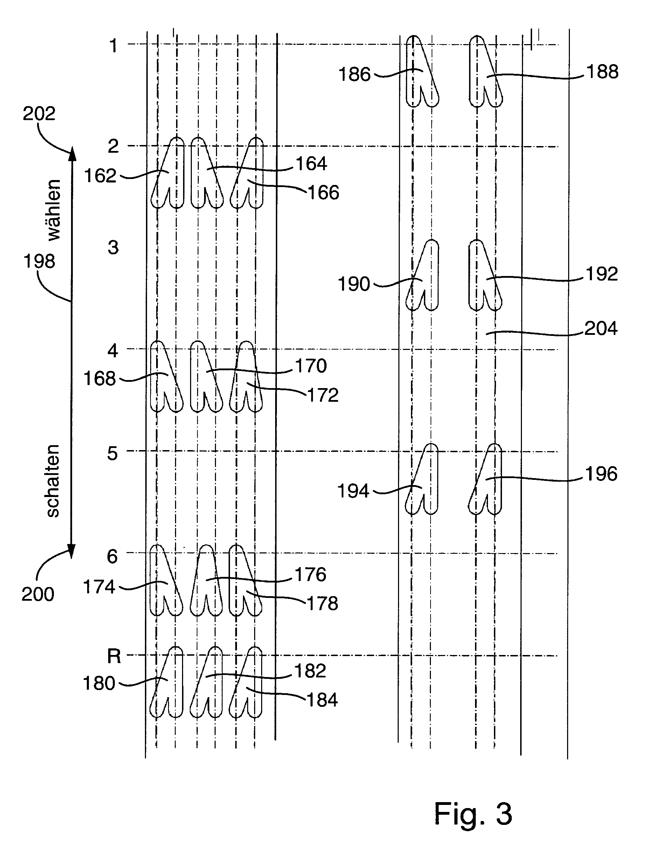

Die hier gegebene, beispielhafte Anordnung derartiger Nuten ist beispielhaft in der Fig. 3 gezeigt, wo links für die Schaltwalze 158 und rechts für die Schaltwalze 160 abgewickelte Innenoberfläche bzw. die halbe, sich über 180° erstreckende Innenoberfläche mit den Nuten der beiden Schaltwalzen 158, 160 gezeigt ist.

Wie aus dieser Fig. ersichtlich, sind in diesem Ausführungsbeispiel die Nuten jeweils so gestaltet, dass sie zwei gerade Abschnitte aufweisen, die an einem Ende ineinander übergehen. Die Nuten spannen dabei - wie Fig. 3 entnommen werden kann - eine Art Dreieck auf, wobei die direkte Verbindung von zwei Ecken dieses Dreiecks unterbrochen ist, also nutfrei ist. Die Nuten sind also so angeordnet, dass sie im wesentlichen ein Dreieck aufspannen, bei dem ein Schenkel nicht gegeben bzw. nutfrei ist.

Wie Fig. 3 entnommen werden kann, sind dabei drei verschiedene Nut-Typen bzw. Nut-Formen vorgesehen. Ein erster Nut-Typ (vgl. z.B. Bezugszeichen 176) ist so gestaltet, dass die von den beiden geraden Abschnitten gebildeten beiden Nutabschnitte, die im Folgenden als Schenkel bezeichnet werden, jeweils geneigt zur Umfangsrichtung bzw. reinen Umfangsrichtung (ohne Axialkomponente) verlaufen und an einem Ende aneinander stoßen. Sie sind im wesentlichen hier spiegelsymmetrisch zur genannten Umfangsrichtung angeordnet. Ein zweiter Nut-Typ ist so gestaltet, dass der eine Schenkel im wesentlichen in Umfangsrichtung verläuft und der zweite Schenkel, der mit seinem einen Ende das Ende des ersten Schenkels kontaktiert, geneigt zur Umfangsrichtung sich erstreckt, und zwar so, dass er in einer ersten Axialrichtung wegverläuft (vgl. z.B. Bezugszeichen 164). Der dritte Typ dieser Nuten ist im wesentlichen spiegelsymmetrisch zum zweiten Typ dieser Nuten gestaltet, und zwar insbesondere bezüglich einer senkrecht zur Achse der Schaltwalze gelegenen Ebene.

Wie die Skala am linken Bildrand in Fig. 3 erkennen lässt, die die Gänge anzeigt, sind zum Einlegen eines jeden Ganges jeweils für jeden der Stifte 144, 146, 148 bzw. für jede der Schiebemuffen 134, 136, 138 jeweils eine Nut vorgesehen, wobei diese Nuten axial nebeneinander gelegen sind, also verschiedenen axial beabstandeten Reihen zugeordnet sind. Entsprechendes gilt für die Nuten der zweiten Schaltwalze 160.

Die Nuten sind in diesem Ausführungsbeispiel also nicht nur so angeordnet, dass sie Reihen bilden (in Umfangsrichtung gesehen), wobei diese Reihen axial voneinander beabstandet sind, sondern auch so, dass sie in Axialrichtung Reihen bilden, die in Umfangsrichtung voneinander beabstandet sind. Dies ist bei beiden der Schaltwalzen 158, 160 gegeben, wobei sich allerdings die Anzahl der Nuten unterscheidet. Dies ist hier so, dass jede der sich in Axialrichtung der ersten Schaltwalze 158 erstreckenden Nut-Reihen der Anzahl nach so viel Nuten aufweist, wie Schiebemuffen bzw. Führungsstifte für das Einlegen und Auslegen von Gängen des ersten Planetengetriebes 28 gegeben sind. Da beim Ausführungsbeispiel drei Schiebemuffen 134, 136, 138 bzw. drei Führungsstifte 144, 146, 148 gegeben sind, weist folglich jede dieser sich in Axialrichtung erstreckenden Nut-Reihen drei Nuten auf. Anzumerken ist allerdings, dass jeder Schiebemuffen 134, 136, 138 bzw. 140, 142 ein Führungsstift zugeordnet sein kann; es können aber auch jeder Schiebemuffe mehrer, insbesondere bezogen auf die Umfangsrichtung der entsprechenden Schaltwalze beabstandete, Führungsstifte vorgesehen sein.

Entsprechendes gilt auch für die Anzahl der Nuten, die in jeder sich in Axialrichtung der zweiten Schaltwalze 160 erstreckenden Nut-Reihen gegeben sind. Da dort zwei Schiebemuffen 140, 142 gegeben sind, weist jede der sich in Axialrichtung der zweiten Schaltwalze 160 erstreckenden Nut-Reihen zwei Nuten auf.

Die sich in Umfangsrichtung der Schaltwalze erstreckenden Nut-Reihen weisen jeweils so viele Nuten auf, wie über die entsprechende Schaltwalze 158 bzw. 160 bzw. in dem entsprechenden Planetengetriebe an Gängen schaltbar sind, oder ein ganzzahliges Vielfaches dieser Anzahl an Gängen. Da mittels der ersten Schaltwalze 158 bzw. im ersten Planetengetriebe 28 vier Gänge schaltbar sind, nämlich der zweite Gang, der vierte Gang und der Rückwärtsgang, weist jede der sich in Umfangsrichtung erstreckenden Nut-Reihen dort vier Nuten auf, oder ein Vielfaches von vier, wie beispielsweise acht oder zwölf. Entsprechendes gilt auch für die Anzahl der Nuten, die in den sich in Umfangsrichtung erstreckenden Nut-Reihen der zweiten Schaltwalze gegeben sind. Da sich über die zweite Schaltwalze 160 bzw. im zweiten Planetengetriebe 30 gemäß dem Ausführungsbeispiel drei Gänge schalten lassen, nämlich der erste Gang, der dritte Gang und der fünfte Gang, weist jede der sich in Umfangsrichtung erstreckenden Nut-Reihen drei Nuten auf, oder ein Vielfaches von drei, wie beispielsweise sechs oder neun.

Zuvor wurde insbesondere erläutert, dass das in Fig. 3 gezeigte Nocken- bzw Nutmuster auf der Innenoberfläche der jeweiligen Schaltwalze 158 bzw. 160 vorgesehen ist. Es kann aber auch vorgesehen sein, dass das in Fig. 3 gezeigte Muster mehrmals auf der Innenoberfläche der Schaltwalze 158 bzw. 160 vorgesehen ist. Gemäß Fig. 2 ist dies insbesondere so, dass sich dieses in Fig. 3 gezeigte Nocken- bzw. Nutmuster zweimal auf der Innenoberfläche der Schaltwalze 158 bzw. 160 erstreckt. Dabei ist vorgesehen, dass das in Fig. 3 gezeigte Muster sich jeweils über im wesentlichen 180° der Innenoberfläche der Schaltwalze 158 bzw. 160 erstreckt. Dies bedeutet insbesondere, die Anzahl der Nuten, die in den jeweiligen sich in Umfangsrichtung erstreckenden Nutreihen gegeben ist, doppelt so groß ist, wie es oben genannt wurde, was durch den Begriff "Vielfaches" oben bereits angedeutet ist. Es kann aber auch vorgesehen sein, dass das entsprechende Muster mehr als zweimal, wie beispielsweise dreimal oder viermal oder fünfmal, dort vorgesehen ist. Dies ermöglicht beispielsweise, dass Wählvorgänge schneller durchgeführt werden können. In diesem Fall sind dann für jeden Gang entsprechend mehrere, wie z.B. zwei oder drei, sich jeweils in Axialrichtung erstreckende Nut-Reihen, auch über den Umfang gesehen, vorgesehen.

Es ist vorgesehen, dass die Gänge in einem jeweiligen der beiden Planetengetriebe 28 bzw. 30 bzw. Radsätze 43 bzw., 45 geschaltet werden können, ohne das Schalten der Gänge bzw. die Gänge in dem anderen Planetengetriebe bzw. Radsätze 45 bzw. 43 zu beeinflussen.

Es ist vorgesehen, dass die erste Schaltwalze 158 sowie die zweite Schaltwalze 160 jeweils axial fest und drehbeweglich gelagert sind. Eine erste Orientierung der Drehrichtung ist für das Schalten vorgesehen und eine zweite Orientierung der Drehrichtung ist für das Wählen vorgesehen. In Fig. 3 ist ein Doppelpfeil 198 eingetragen, wobei die Pfeilspitze 200 die Bewegungsrichtung für das "Schalten" anzeigt und wobei die Pfeilspitze 202 die Bewegungsrichtung für das "Wählen" anzeigt.

Die erste Schaltwalze 158 bzw. die zweite Schaltwalze 160 kann mittels des Elektromotors 52 wahlweise in dieser Wählrichtung 202 und in dieser Schaltrichtung 200 angetrieben werden. Zum Wählen eines Ganges in einem der beiden Planetengetriebe 28, 30 kann dabei die entsprechende Schaltwalze zunächst in Wählrichtung angetrieben werden, bis der entsprechende Führungsstift bzw. die entsprechenden Führungsstifte eine im wesentlichen vorbestimmte Position eingenommen haben. Anschließend kann dann die Schaltwalze gegenläufig angetrieben werden, also in Schaltrichtung, so dass die Führungsstifte, deren Hülsen verschoben werden sollen, entsprechend mit einer Nut bzw. mit Nocken zusammenwirken. Dies ist in Fig. 3 am Beispiel der Nut 192 bzw. des dritten Ganges dargestellt. Dort kann zunächst die zweite Schaltwalze 160 in Wählrichtung so lange angetrieben werden, bis der Führungsstift 152 im wesentlichen im Bereich 204 ist. Anschließend kann die Antriebsrichtung der zweiten Schaltwalze 160 verändert (Gegenrichtung) werden, so dass die Schaltwalze sich in Schaltrichtung dreht und der Führungsstift 152 in die Nut 192 eingreift und ― insbesondere, da die zweite Schaltwalze 160 axial fest angeordnet ist ― dort so bewegt wird, dass die Schalt- bzw. Schiebemuffe 142 so bewegt wird ― sofern es erforderlich ist ― bzw. so in Axialrichtung bewegt wird ― sofern es erforderlich ist - , wie es zum Einlegen des gewünschten Ganges erforderlich ist (vgl. Bezugszeichen 203 in Fig.3) . Dabei ist insbesondere vorgesehen, dass gleichzeitig auch der Führungsstift 150 mit der Nut 190 entsprechend zusammenwirkt.

Sofern eine entsprechende Schalt- bzw. Schiebemuffe bereits ihre Sollposition für das Einlegen des entsprechenden Ganges hat - was hier insbesondere im Fall des ersten Planetengetriebes 28 auch einer Neutralposition entsprechen kann - wird die entsprechende Schalt- bzw. Schiebemuffe mittels der entsprechenden Nut nicht bewegt.

Eine Verriegelung kann dabei beispielsweise dadurch erreicht werden, dass das Nut- bzw. Nockenprofil mit jeder Hülse bzw. Schiebemuffe nur in der gewünschten Position für den entsprechenden Gang endet.

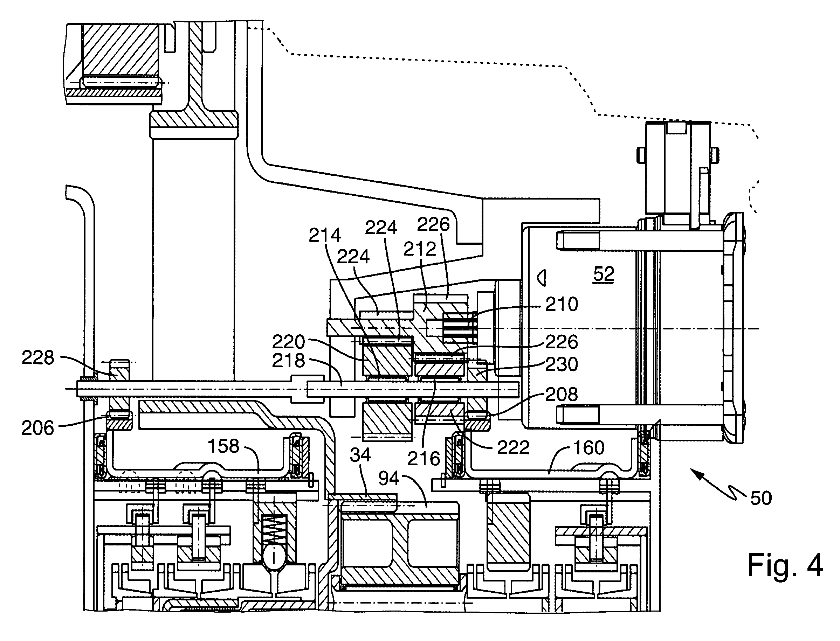

Die Schaltwalzen 158, 160 weisen jeweils eine Verzahnung 206 bzw. 208 auf, die hier als Außenverzahnung gestaltet ist. Über diese Verzahnung 206 bzw. 208 kann die jeweilige Schaltwalze 158 bzw. 160 mittels des Elektromotors 52 angetrieben werden. Dies ist beispielsweise so, dass der Elektromotor 52 eine Elektromotor-Ausgangswelle 210 aufweist. Die Elektromotor-Ausgangswelle 210 trägt eine verzahnte Welle 212, die grundsätzlich aber auch einstückig mit der Elektromotor-Ausgangswelle 210 ausgebildet sein kann. Zwischen der Elektromotor-Ausgangswelle 210 und den Schaltwalzen 158 bzw. 160 sind einseitig wirkende Kupplungen bzw. Freiläufe vorgesehen. Dabei ist insbesondere vorgesehen, dass ein erster einseitig wirkender Freilauf 214 parallel zu einem zweiten einseitig wirkenden Freilauf 216 geschaltet ist (vgl. Fig. 4). Der eine 214 dieser beiden Freiläufe wirkt dabei im Vergleich zu dem anderen 216 dieser beiden Freiläufe in entgegengesetzter Richtung.

Es ist (vgl. Fig. 4) eine Schalt-Wähl-Welle 218 vorgesehen, auf welcher ein erstes Zahnrad 220 sowie ein zweites Zahnrad 222 vorgesehen ist. Der erste Freilauf 214 ist dabei zwischen diesem ersten Zahnrad 220 und dieser Schalt-Wähl-Welle 218 angeordnet und der zweite Freilauf 216 ist dabei zwischen diesem zweiten Zahnrad 222 und dieser Schalt-Wähl-Welle 218 angeordnet. Das erste Zahnrad 220 greift in eine erste Gegenverzahnung 224 ein und das zweite Zahnrad 222 greift in eine zweite Gegenverzahnung 226 ein (vgl. Fig. 4).

Die erste Gegenverzahnung 224 und die zweite Gegenverzahnung 226 sind dabei Bestandteil der verzahnten Welle 212. Dies kann so sein, dass die erste Gegenverzahnung 224 und die zweite Gegenverzahnung 226 einstückig miteinander ausgebildet sind. Es kann aber auch vorgesehen sein, dass diese Gegenverzahnungen 224, 226 als getrennte Teile ausgebildet sind. Beispielsweise kann auch vorgesehen sein, dass sie als separate Zahnräder ausgebildet sind, die auf der Elektromotorausgangswelle 210 sitzen.

Ein einseitig wirkender Freilauf, der erste Freilauf 214, ist dafür vorgesehen, um ein Drehmoment zu übertragen, wenn der Elektromotor 52 in Schaltrichtung angetrieben wird. Dieser erste Freilauf 214 überträgt kein Drehmoment, wenn der Elektromotor 52 in Wählrichtung angetrieben wird. Der zweite, einseitig wirkende Freilauf 216 überträgt Drehmoment, wenn der Elektromotor 52 in Wählrichtung angetrieben wird, und überträgt kein Drehmoment, wenn der Elektromotor 52 in Schaltrichtung angetrieben wird.

Die Übersetzung zwischen der ersten Gegenverzahnung 224 und dem ersten Zahnrad 220 weicht von der Übersetzung zwischen der zweiten Gegenverzahnung 226 und dem zweiten Zahnrad 222 ab. Im Zusammenwirken mit den Freiläufen 214, 216 kann hierdurch erreicht werden, dass die Gesamtübersetzung zwischen dem Elektromotor 52 bzw. der Elektromotor-Ausgangswelle 210 und Schaltwalze 158 bzw. 160 für die Bewegung in Wählrichtung anders gewählt werden kann als für die Bewegung in Schaltrichtung. Im Ausführungsbeispiel ist beispielsweise vorgesehen, dass die Übersetzung der Übersetzungsstufe 224/220 im wesentlichen "60" entspricht und die Übersetzungsstufe 226/222 im wesentlichen "15" entspricht; die Übersetzungen können aber auch anders gewählt werden.

Auf der Schalt-Wähl-Welle 218 bzw. einer hiermit gekoppelten Welle sind ferner zwei Zahnräder 228, 230 angeordnet. Das eine 228 dieser Zahnräder 228, 230 greift in die Verzahnung 206 ein, die an der ersten Schaltwalze 158 vorgesehen ist. Das andere Zahnrad 230 greift in die Verzahnung 208 ein, die an der zweiten Schaltwalze 160 vorgesehen ist.

Die Betätigungseinrichtung 50 weist insbesondere den Elektromotor 52 sowie die Schaltwalzen 158, 160 und die zwischen diesem Elektromotor 52 und diesen Schaltwalzen 158, 160 angeordnete - vorzugsweise mechanische - Übertragungsstrecke bzw. Übertragungsbauteile auf. Die Betätigungseinrichtung 50 weist vorzugsweise also einen elektromechanischen Aktor auf bzw. ist als elektromechanischer Aktor ausgebildet. Es sei in diesem Zusammenhang angemerkt, dass auch eine anders gestaltete Betätigungseinrichtung vorgesehen sein kann, wie beispielsweise eine hydrostatische oder hydraulische Betätigungseinrichtung oder eine Betätigungseinrichtung, die eine "normale" Schaltwalze bereits bekannter Art aufweist. Es kann auch vorgesehen sein, dass die Betätigungseinrichtung Schaltgabeln aufweist. Es können insbesondere bei derartigen Gestaltungen auch mehrere Elektromotoren oder andere Antriebe vorgesehen sein. Besonders bevorzugt ist allerdings eine Gestaltung mit genau einem Motor, da dies eine Vereinfachung darstellt.

Besonders bevorzugt ist allerdings erfindungsgemäß vorgesehen, dass genau ein Elektromotor für das Antreiben in Schaltrichtung und in Wählrichtung vorgesehen ist, wobei insbesondere vorgesehen ist, dass mittels dieses genau einen Elektromotors das Antreiben in Wähl- und in Schaltrichtung des ersten Planetengetriebes 28 und des zweiten Planetengetriebes 30 erfolgen kann.

Die Führungsstifte 144, 146, 148, 150, 152 bzw. das Zusammenwirken dieser mit den Nuten in den Schaltwalzen ist insbesondere so ausgebildet, dass die Führungsstifte bei einer Drehung der Schaltwalze 158 bzw. 160 in Wählrichtung aus den Nuten herauswandern und bei der Drehung in Schaltrichtung in diese Nuten eingreifen. Sie können beispielsweise einen schwenkbaren Kopf aufweisen, der so profiliert ist, dass er das Eingreifen und Außer-Eingriff-Kommen unterstützt. Sie können aber auch ohne einen solchen Kopf auszuweisen eine entsprechende Profilierung aufweisen. Ferner können sie beispielsweise federbelastet sein.

In bevorzugter Gestaltung ist vorgesehen, dass jeweils zwei Führungsstifte für jede Schaltmuffe bzw. Schalthülse bzw. Schiebemuffe vorgesehen sind. Diese können beispielsweise um 180° (in Umfangsrichtung) versetzt zueinander angeordnet sein.

Ein Beispiel für eine solche Gestaltung, bei der eine Führungshülse drehfest mit dem Gehäuse gekoppelt werden kann, ist in Fig. 5 gezeigt. Die Schiebemuffe 138 bzw. 140 ist dort formschlüssig derart mit dem Gehäuse 86 verbunden, dass die Schiebemuffe 138 bzw. 140 axial verschieblich, allerdings drehfest im Gehäuse angeordnet ist. Von der Schiebemuffe 138 bzw. 142 ragt ein Führungsstift 148 bzw. 152 radial nach außen. Die Führungsstifte 148, 152 sind als einseitig wirkende Führungsstifte ausgebildet. Dies gilt in bevorzugter Gestaltung im übrigen auch für die Führungsstifte 144, 146, 150. Dies ist so, dass der Führungsstift im wesentlich bei einer Bewegung der Schaltwalze 158 bzw. 160 in Wählrichtung im wesentlichen keine Führungsfunktion übernimmt und bei einer Bewegung in Schaltrichtung in eine entsprechende Nut der Schaltwalze eingreift und eine entsprechende Führungsfunktion übernehmen kann. Eine solche Nut ist hier schematisch mit dem Bezugszeichen 232 versehen, wobei diese Nut prinzipiell eine beliebige der Nuten aus Fig. 3 sein kann. Anzumerken ist allerdings hierzu, dass bei der Gestaltung gemäß Fig. 5 das Gehäuse 86 drehfest mit der Schiebemuffe 138 bzw. 140 gekoppelt ist, so dass die Nut 232 aus Fig. 5 strenggenommen eine der Nuten 166, 172, 178, 184, 186, 190 bzw. 194 aus Fig. 3 sein kann. Es sei aber angemerkt, dass die Gestaltung für die verbleibenden Schiebemuffen, die mit der ersten Getriebeeingangswelle 18 bzw. zweiten Getriebeeingangswelle 20 drehfest koppelbar sind, entsprechend sein kann, wobei dort anstelle des Gehäuses ein Abschnitt der entsprechenden Getriebeeingangswelle 18 bzw. 20 bzw. ein an dieser 18 bzw. 20 fest angeordneter Fortsatz tritt.

Wie gut Fig. 2 entnommen werden kann, sind die Führungsstifte 144, 146, 152 für die Schiebemuffen 134, 136, 142, mittels welchen Kopplungen zur Getriebeeingangwelle 18 bzw. 20 erzeugt werden können, dort allerdings abweichend angeordnet bzw. ausgebildet. Dort ist insbesondere vorgesehen, dass die Führungsstifte gegenüber der zugeordneten Schiebemuffe 134, 136, 142, so angeordnet sind, dass eine Relativdrehbeweglichkeit ermöglich ist und der entsprechende Führungsstift 144, 146, 152 mit der entsprechenden Schiebemuffe 134, 136, 142 im wesentlichen axial gekoppelt ist. Diese Kopplung ist hier so, dass der jeweilige Führungsstift einen sich vergabelnden Fortsatz aufweist, in welchem die zugeordnet Schiebemuffe 134, 136, 142 axial gefangen ist. Dies ist auch gut im vergrößerten Ausschnitt aus Fig. 1 zu ersehen, der in Fig. 6 dargestellt ist. In Fig. 6 ist insbesondere eine vergrößerte Darstellung der Synchronisierungseinrichtung dargestellt.

Wie Fig. 6 entnommen werden kann, weist der jeweilige Führungsstift 144, 146, 152, mittels welchem eine drehfest Kopplung zwischen einer Getriebeeingangswelle 18 bzw. 20 und einem Bauteil des Planetengetriebes 28 bzw. 20 erzeugt werden kann ― in Fig. 6 dargestellt für die erste Getriebeeingangswelle 18 - einen Abschnitt dar, der einen Vorsprung oder Ring oder dergleichen der Schiebemuffe umgreift, und zwar axial umgreift. In Umfangsrichtung ist hier eine Drehbeweglichkeit zugelassen.

Der Bereich 240 mit dem Wandabschnitt 242 bildet einen Eingang von der (ersten) Kupplung 24 für die geraden Gänge. Der Wandabschnitt 242 ist hier beispielhaft annähernd scheibenförmig ausgebildet bzw. erstreckt sich im Wesentlichen in radialer Richtung. Der Wandabschnitt 242 ist an die erste Getriebeeingangswelle 18 angeformt bzw. Bestandteil dieser. Im Zusammenwirken mit dem Wandabschnitt 244, der hier im Wesentlichen hohlzylindrisch gestaltet ist und fest mit dem Wandabschnitt 242 verbunden ist, bildet der Wandabschnitt 242 einen im Wesentlichen napfartigen Körper, bei dem zentral mittig im vom Wandabschnitt 242 gebildeten Boden eine zentrale Durchgangsöffnung gegeben ist, wobei dieser Wandabschnitt 242 im Bereich dieser Durchgangsöffnung an die erste Getriebeeingangswelle 18 unter Bildung eines einstückigen Teils angeformt ist.

Der Bereich 246 mit dem Wandabschnitt 248 bildet einen Eingang von der (zweiten) Kupplung 26 für die ungeraden Gänge. Der Wandabschnitt 248 ist hier beispielhaft annähernd scheibenförmig ausgebildet bzw. erstreckt sich im Wesentlichen in radialer Richtung. Der Wandabschnitt 248 ist an die zweite Getriebeeingangswelle 20 angeformt bzw. Bestandteil dieser. Im Zusammenwirken mit dem Wandabschnitt 250, der hier im Wesentlichen hohlzylindrisch gestaltet ist und fest mit dem Wandabschnitt 248 verbunden ist, bildet der Wandabschnitt 248 einen im Wesentlichen napfartigen Körper, bei dem zentral mittig im vom Wandabschnitt 248 gebildeten Boden eine zentrale Durchgangsöffnung gegeben ist, wobei dieser Wandabschnitt 248 im Bereich dieser Durchgangsöffnung an die zweite Getriebeeingangswelle 20 unter Bildung eines einstückigen Teils angeformt ist.

Fig. 6 kann auch gut entnommen werden, dass die Synchronisationsnabe bzw. der Synchronisationskörper und die jeweilige Schiebemuffe kombiniert bzw. zusammengefasst werden können, indem das Drehmoment von der Außenseite auf die Schiebemuffe aufgebracht wird. Ferner kann Fig. 6 gut entnommen werden, dass die Arretierung(en) für die Vorsynchronisierung vereinfacht gestaltet sind im Vergleich zu bekannten Vorgelege-Synchronisierungseinrichtungen.

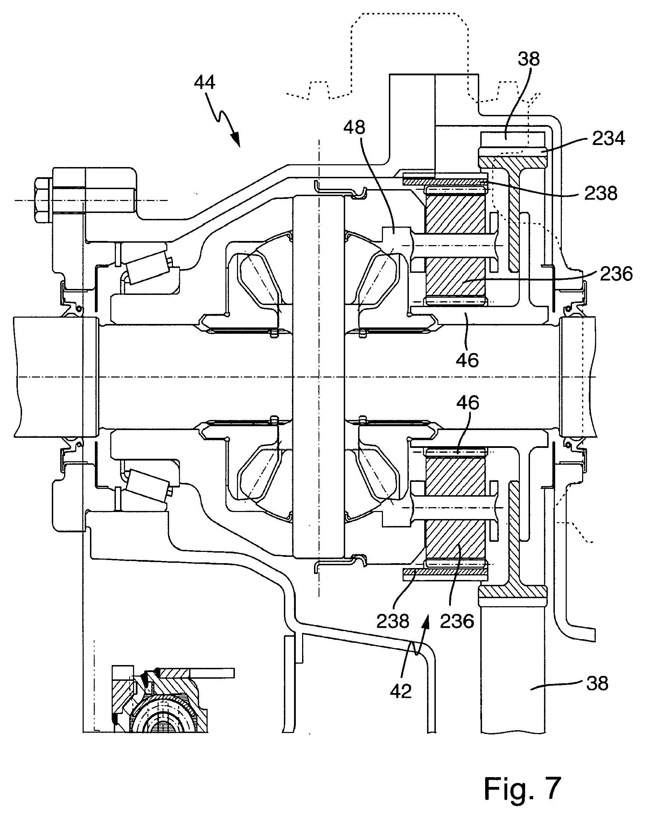

Fig. 7 zeigt einen weiteren vergrößerten Ausschnitt aus Fig. 1. In Fig. 7 ist insbesondere der Bereich des Differentials 44 vergrößert dargestellt. Dort ist gut zu erkennen, dass die Übertragungskette 38, die - was hier nicht dargestellt ist - in eine Verzahnung des Fortsatzes 36 eingreift, Drehmoment von diesem Fortsatz 36 bzw. von dem jeweiligen Planetengetriebe 28 bzw. 30 an das Sonnenrad 46 des Radsatzes 42 überträgt. Dies ist hier so, dass das Sonnenrad 46 fest mit einem Zahnrad 234 gekoppelt ist, in welches die Übertragungskette 38 eingreift. Der Radsatz 42 ist als Planetengetriebe gestaltet bzw. weist ein Planetengetriebe auf, das wiederum das Sonnenrad 46, mehrere in dieses Sonnenrad 46 eingreifende Planetenräder 236 sowie ein Hohlrad 238 aufweist, in welches die Planetenräder 236 eingreifen. Es sind mehrere dieser Planetenräder 236 auf den Umfang verteilt vorgesehen, wie beispielsweise drei oder vier oder fünf oder auch eine abweichende Anzahl.

Im Vergleich zu konventionellen "ring-and-pinion"-Gestaltungen bzw. Ritzel-Tellerrad-Sätzen ist die in Fig. 7 gezeigte Gestaltung wegen des geringeren Raumbedarf des Hohlrades platzsparender und ermöglicht die Verwendung kleinerer Lager. Ausführungsformen mit einer Gestaltung gemäß Fig. 7 können beispielsweise in Transaxle-Fahrzeugen eingebaut werden. In der Gestaltung gemäß Fig. 7 kann insbesondere vorgesehen sein, dass das Drehmoment am Hohlrad "reflektiert" wird und vom Planetenträger 48 in Richtung des Differentials 44 weitergeleitet wird, bzw. dass das Hohlrad 238 fest im Gehäuse angeordnet ist und der Planetenträger 48 den mit dem Differential 44 verbundenen Ausgang bildet.

Alternativ zur Anordnung gemäß Fig. 7 kann die Funktion mit einer Übertragungswelle erreicht werden.

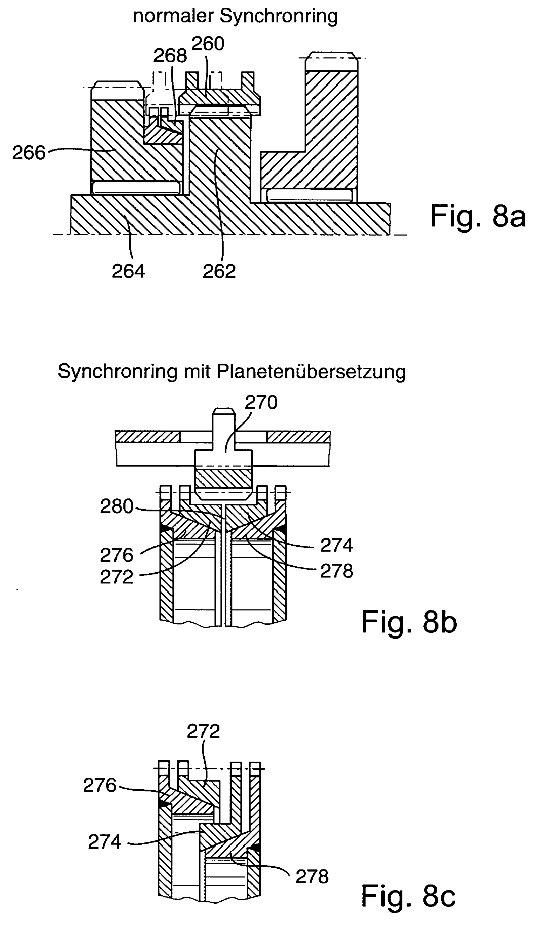

Die Fig. 8a bis 8c zeigen beispielhafte Gestaltungen für Synchronisiereinrichtungen für Lastschaltgetriebe.

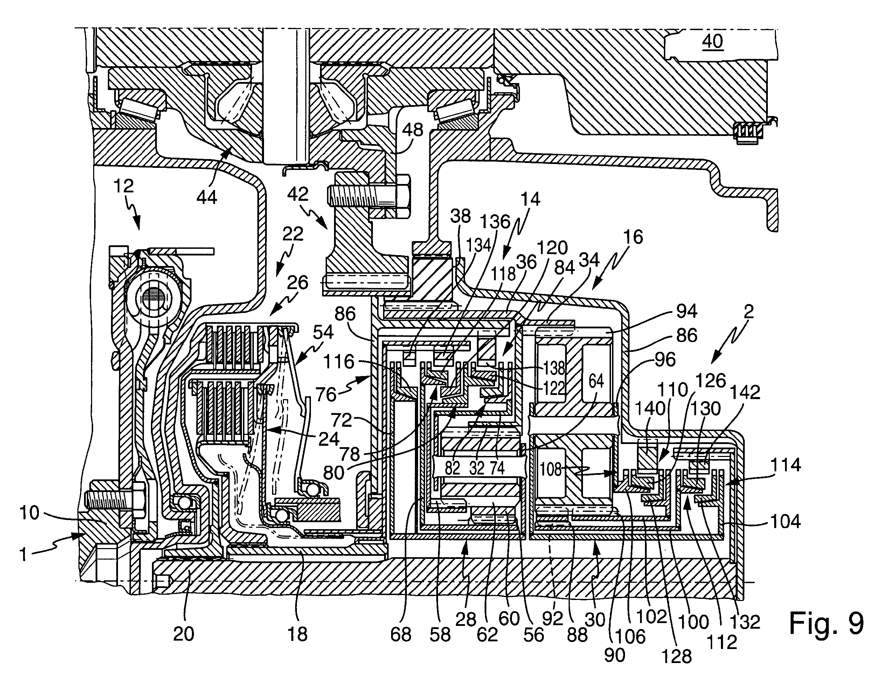

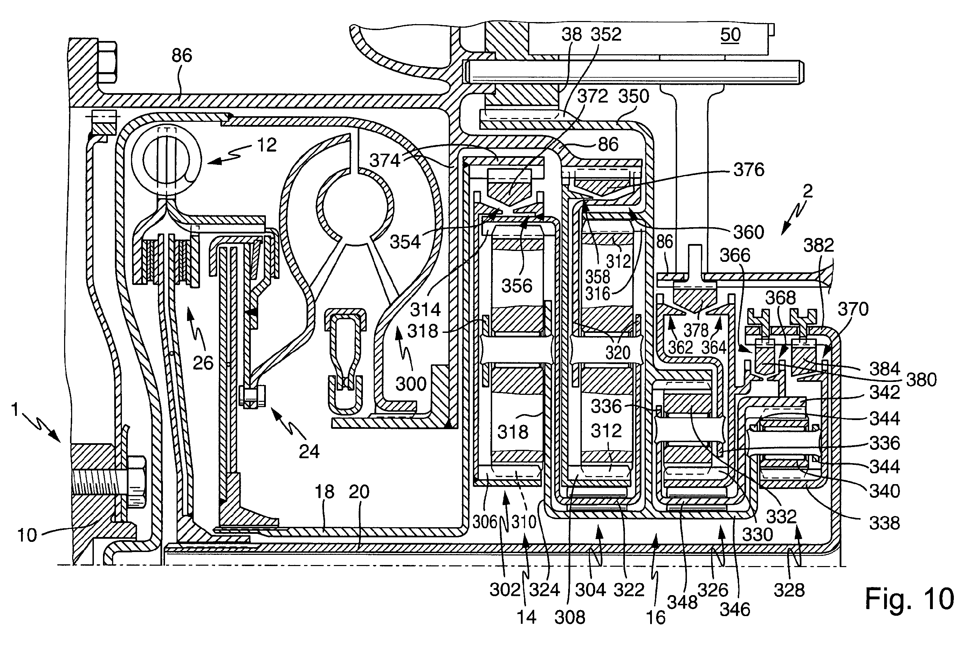

In Fig. 8a ist eine "normale" Synchronisiereinrichtung gezeigt. Dort ist vorgesehen, dass eine Schiebemuffe 260 drehfest und axial beweglich an einem Fortsatz 262 einer treibenden Welle 264 angeordnet ist. Auf dieser treibenden Welle 264 ist das Zahnrad 266 mit dem Synchronisationsring 268 gelagert. Die Gestaltung gemäß Fig. 8a kann beispielsweise auch (alternativ) bei Gestaltungen gemäß Fig. 1 bis 7 oder gemäß Fig. 9 oder gemäß Fig. 10 verwendet werden, und zwar beispielsweise für die dortigen Sonnenräder. Ist allerdings in den genannten Fig. anders gezeigt; Gestaltung gemäß Fig. 8a kann beispielsweise eine Alternative sein. Es kann insbesondere vorgesehen sein, dass "normale innere Schaltsysteme verwendet werden, obwohl diese das Getriebe länger machen.

Besonders vorteilhaft für derartige Planetengetriebe, wie sie beispielsweise in den Fig. 1 bis 7 sowie 9 und 10 gezeigt sind, sind allerdings Synchronisationseinrichtungen gemäß den Fig. 8b oder 8c, die zwei verschiedene erfindungsgemäße Variationen zeigen. Wie Fig. 8b entnommen werden kann, ist die dortige Schiebemuffe 270 nicht radial innen mit an einem treibenden Bauteil gelagert (vgl. Fig. 8a), sondern radial außen (vgl. Fig. 8b).

Fig. 8b zeigt eine beispielhafte erfindungsgemäße Gestaltung, bei der die Schiebemuffe 270 zur alternativen Koppelung mit unterschiedlichen Zahnrädern vorgesehen ist, für die jeweils ein Synchronisationsring 272 bzw. 274 vorgesehen ist. Dort ist vorgesehen, dass die Fortsätze 276 bzw. 278 der jeweiligen Zahnräder axial derart beabstandet sind bzw. die zugehörigen Synchronisationsringe 272, 274 axial derart beabstandet sind, dass zwischen den jeweiligen axial zugewandten Enden ein axialer Zwischenraum 280 gegeben ist.

Eine alternative Gestaltung ist in Fig. 8c gezeigt. Auch bei dieser Gestaltung ist die ― allerdings nicht gezeigte - Schiebemuffe 270 nicht radial innen mit an einem treibenden Bauteil gelagert, sondern radial außen. Die von dieser Schiebemuffe 270 betätigten Synchronisationsringe 272 bzw. 274 bzw. die Fortsätze 276, 278 der beiden Zahnräder erstrecken sich so, dass Ihre einander zugewandten Enden axial überlappend ausgebildet sind, was in gewissen Situationen platzsparend sein kann. Dabei kann beispielsweise - wie in Fig. 8c gezeigt - vorgesehen sind, dass diese axial einander zugewandten Enden radial auf verschiedenen Höhen gelegen sind.

Die Gestaltungen gemäß Fig. 8b bzw. Fig. 8c können in bevorzugter Gestaltung bei den erfindungsgemäßen Lastschaltgetrieben, bei denen die Teilgetriebe als Planetengetriebe ausgebildet sind, eingesetzt werden, also insbesondere auch bei den in den Fig. 1 bis 7 bzw. 9 bzw. 10 gezeigten Gestaltungen alternativ vorhanden sein.

Fig. 9 zeigt einen beispielhaften erfindungsgemäßen Kraftfahrzeug-Antriebsstrang 1 mit einem beispielhaften erfindungsgemäßen Lastschaltgetriebe, wobei dort das erste Teilgetriebe 14 und das zweite Teilgetriebe 16 jeweils als Planetengetriebe ausgebildet sind, und zwar als Ravigneaux-Planetengetriebe. Die Gestaltung gemäß Fig. 9 ist der Gestaltung gemäß den Fig. 1 bis 7 ähnlich. Entsprechende Bauteile sind mit entsprechenden Bezugszeichen bezeichnet.

Fig. 10 zeigt eine weitere beispielhafte Ausführungsform eines erfindungsgemäßen Kraftfahrzeug-Antriebsstrangs mit einem beispielhaften erfindungsgemäßen Lastschaltgetriebe in schematischer Teilansicht. Das Lastschaltgetriebe weist ein erstes Teilgetriebe 14 sowie ein zweites Teilgetriebe 16 auf. Das erste Teilgetriebe 14 weist eine erste Getriebeeingangswelle 18 auf. Das zweite Teilgetriebe 16 weist eine zweite Getriebeeingangswelle 20 auf, die sich in die bzw. in der als Hohlwelle gestaltete erste Getriebeeingangswelle 18 erstreckt. Im Gegensatz zu den Gestaltungen in den Fig. 1 bis 9 ist bei der Gestaltung gemäß Fig. 10 allerdings vorgesehen, dass die geraden Gänge sowie der Rückwärtsgang des Lastschaltgetriebes mittels des zweiten Teilgetriebes 16 schaltbar sind und die ungeraden Gänge mittels des ersten Teilgetriebes 14. Ebenso wie dies in den Gestaltungen gemäß den Fig. 1 bis 9 vertauscht sein kann, kann dies auch in der Gestaltung gemäß Fig. 10 allerdings vertauscht sein; auch andere Gangzuordnungen sind bevorzugt. Im Ausführungsbeispiel gemäß Fig. 10 ist eine nicht dargestellte Brennkraftmaschine vorgesehen, die eine Motorausgangswelle 10 aufweist. Zwischen der Motorausgangswelle 10 und den Teilgetrieben 14, 16 ist ferner ein Zweimassenschwungrad 12 im Drehmomentfluss vorgesehen, das allerdings - wie auch bei der Gestaltung gemäß den Fig. 1 bis 9 - auch weggelassen sein kann.

Eingangsseitig der ersten Getriebeeingangswelle 18 ist eine erste Kupplung 24 vorgesehen und eingangsseitig der zweiten Getriebeeingangswelle 20 ist eine zweite Kupplung 26 vorgesehen. Die Einheit aus erster Kupplung 24 und zweiter Kupplung 26 kann auch als Doppelkupplung bezeichnet werden. Ferner ist ein Drehmomentwandler 300 vorgesehen.

Die ungeraden Gänge bzw. das Teilgetriebe mit den ungeraden Gängen kann - beispielsweise zum Starten - mit dem Drehmomentwandler 300 verbunden bzw. gekoppelt werden. Es sei angemerkt, dass in entsprechender Weise auch in der Gestaltung gemäß den Fig. 1 bis 9 ein entsprechender Drehmomentwandler integriert sein kann. Der Drehmomentwandler 300 kann mit einer einfachen Kupplung geschlossen werden, es kann insbesondere vorgesehen sein, dass die erste Kupplung 24 so ausgebildet und angeordnet ist, dass sie als Wandler-Überbrückungskupplung dient.

Das erste Teilgetriebe 14 ist als Simpson-Getriebe gestaltet bzw. eine Art bzw. Abwandlung eines Simpson-Getriebes gestaltet. Bei einem Simpson-Getriebe ist in aller Regel ein gemeinsames Sonnenrad für zwei Radsätze bzw. Planetenradsätze vorgesehen. In der beispielhaften erfindungsgemäßen Gestaltung gemäß Fig. 10 ist allerdings vorgesehen, dass das erste Teilgetriebe 14 einen ersten Radsatz bzw. Planetenradsatz 302 und einen zweiten Planetenradsatz 304 aufweist, wobei diese Planetenradsätze 302, 304 jeweils ein Sonnenrad 306 bzw. 308 aufweisen. Die Sonnenräder 306, 308 sind dabei voneinander getrennt und relativ beweglich zueinander angeordnet. Jeder der Radsätze 302, 304 weist Planetenräder 310 bzw. 312 auf, wobei beispielsweise jeweils drei oder vier oder fünf der mehr Planetenräder auf den Umfang verteilt vorgesehen sein können. Ferner weist jeder der Radsätze 302, 304 ein Hohlrad 314 bzw. 316 auf, sowie einen Planetenträger 318 bzw. 320.

Das Hohlrad 314 des ersten Radsatzes 302 des ersten Teilgetriebes 14 ist mit dem Planetenträger 320 des zweiten Radsatzes 304 des ersten Teilgetriebes 14 fest bzw. drehfest verbunden, wozu beispielsweise ein entsprechender Fortsatz 322 zwischen diesen vorgesehen sein kann. In entsprechender Weise ist der Planetenträger 318 des ersten Radsatzes 302 des ersten Teilgetriebes 14 fest bzw. drehfest mit dem Hohlrad 316 des zweiten Radsatzes 304 des ersten Teilgetriebes 14 verbunden wozu ebenfalls ein entsprechender Fortsatz 324 vorgesehen sein kann.

In der Gestaltung gemäß Fig. 10 ist ferner das zweite Teilgetriebe 16 als Simpson-Getriebe bzw. als eine Art Simpson-Getriebe gestaltet. Auch dieses zweite Teilgetriebe 16 weist einen ersten Radsatz bzw. ersten Planetenradsatz 326 sowie einen zweiten Planetenradsatz bzw. Radsatz 328 auf.

Der erste Radsatz 326 weist ein Sonnenrad 330, Planetenräder 332, ein Hohlrad 334, sowie einen Planetenträger 336 auf. Es können beispielsweise drei oder vier oder fünf Planetenräder 332 auf den Umfang verteilt vorgesehen sein; auch eine abweichende Anzahl ist bevorzugt. Der zweite Radsatz 328 weist ein Sonnenrad 338, Planetenräder 340, ein Hohlrad 342 sowie einen Planetenträger 344. Im Hinblick auf die Anzahl der Planetenräder des zweiten Radsatzes 328 sei auf obige Ausführung verwiesen.

Das Hohlrad 334 des ersten Radsatzes 326 des zweiten Teilgetriebes 16 ist fest bzw. drehfest mit dem Planetenträger 344 des zweiten Radsatzes 328 des zweiten Teilgetriebes 16 fest bzw. drehfest verbunden ist. In entsprechender Weise ist das Hohlrad 342 des zweiten Radsatzes 328 des zweiten Teilgetriebes 16 mit dem Planetenträger 336 des ersten Radsatzes 326 des zweiten Teilgetriebes 16 fest bzw. drehfest verbunden. Für die entsprechenden Hohlrad-Planetenträger-Kopplungen können entsprechende Fortsätze 346 bzw. 348 vorgesehen sein.

Es kann vorgesehen sein, dass das Sonnenrad 306 des ersten Radsatzes 302 des ersten Teilgetriebes 14 den gleichen Teilkreisdurchmesser aufweist wie das Sonnenrad 308 des zweiten Radsatzes 304 des ersten Teilgetriebes 14. Ferner kann vorgesehen sein, dass das erste Sonnenrad 330 des ersten Radsatzes 326 des zweiten Teilgetriebes 16 den gleichen Teilkreisdurchmesser aufweist wie das Sonnenrad 338 des zweiten Radsatzes 328 des zweiten Teilgetriebes 16. Es kann auch vorgesehen sein, dass der Teilkreisdurchmesser der Sonnenräder 308, 306 dem Teilkreisdurchmesser der Sonnenräder 330, 338 entspricht.

Das Hohlrad 334 des ersten Radsatzes 326 des zweiten Teilgetriebes 16 ist drehfest mit dem Hohlrad 316 des zweiten Radsatzes 304 des ersten Teilgetriebes 14 verbunden. Mit diesen Hohlrädern 316, 334 verbunden bzw. an diesen fest angeordnet ist ein Fortsatz 350, an dem eine Verzahnung 352 für den Eingriff einer Transfer- bzw. Übertragungskette 38 vorgesehen ist, die beispielsweise so verschaltet werden kann, wie es anhand der Fig. 1 bis 7 erläutert wurde.

Das erste Teilgetriebe 14 weist Gangkupplungen 354, 356, 358, 360 auf. Durch Schließen der Gangkupplung 354 wird die erste Getriebeeingangswelle 18 drehfest mit dem Sonnenrad 306 des ersten Radsatzes 302 des ersten Teilgetriebes 14 verbunden. Durch Schließen der Gangkupplung 356 wird die erste Getriebeeingangswelle 18 drehfest mit dem Hohlrad 314 des ersten Radsatzes 302 des ersten Teilgetriebes 14 und somit auch mit dem Planetenträger 320 des zweiten Radsatzes 304 des ersten Teilgetriebes 14 verbunden. Durch Schließen der Gangkupplung 358 wird das Sonnenrad 308 des zweiten Radsatzes 304 des ersten Teilgetriebes 14 am bzw. gegenüber dem Gehäuse 86 festgesetzt. Durch Schließen der Gangkupplung 360 wird der Planetenträger 320 des zweiten Radsatzes 304 des ersten Teilgetriebes 14 und somit auch das Hohlrad 314 des ersten Radsatzes 302 des ersten Teilgetriebes 14 am bzw. gegenüber dem Gehäuse 86 festgesetzt.

Insbesondere als Bestandteil entsprechender Kupplungen ist eine Schiebemuffe 372 vorgesehen, die drehfest und axial verschieblich an der ersten Getriebeeingangswelle 18 bzw. einem Fortsatz 374 der ersten Getriebeeingangswelle 18 angeordnet ist. Diese Schiebemuffe 372 dient zum wahlweisen Schließen der Kupplungen 354 bzw. 356, so dass jeweils nur eine dieser beiden Kupplungen 354, 356 zeitgleich geschlossen sein kann.

Entsprechendes gilt für die Schiebemuffe 376, die drehfest und axial verschieblich am Gehäuse 86 angeordnet ist. Mittels dieser Schiebemuffe 376 kann wahlweise die Gangkupplung 358 oder die Gangkupplung 360 geschlossen werden, so dass jeweils nur eine dieser beiden Gangkupplungen 358, 360 zeitgleich geschlossen sein kann.

Es versteht sich, dass ein Fahrbetrieb über das erste Teilgetriebe 14 nicht möglich ist, wenn gleiche Bauteile des ersten Teilgetriebes 14 einerseits mit der ersten Getriebeeingangswelle 18 und andererseits mit dem Gehäuse 86 fest gekoppelt sind. Entsprechende Stellungen der Schiebemuffen 372, 376 bzw. der Gangkupplungen können beispielsweise allerdings für eine Wegfahrsperre oder dergleichen verwendet werden.

Zum Einlegen der Gänge des zweiten Teilgetriebes 16 sind Gangkupplungen 362, 364, 366, 368, 370 vorgesehen. Durch Schließen der Gangkupplung 362 wird der Planetenträger 336 des ersten Radsatzes 326 des zweiten Teilgetriebes 16, und somit auch das Hohlrad 342 des zweiten Radsatzes 328 des zweiten Teilgetriebes 16, an bzw. gegenüber dem Gehäuse 86 festgesetzt. Durch Schließen der Gangkupplung 364 wird das Sonnenrad 330 des ersten Radsatzes 326 des zweiten Teilgetriebes 16 am bzw. gegenüber dem Gehäuse 86 festgesetzt. Durch Schließen der Gangskupplung 366 wird die zweite Getriebeeingangswelle 20 drehfest mit dem Sonnenrad 330 des ersten Radsatzes 326 des zweiten Teilgetriebes 16 verbunden. Durch Schließen der Gangkupplung 368 wird die zweite Getriebeeingangswelle 20 drehfest mit dem Hohlrad 342 des zweiten Radsatzes 328 des zweiten Teilgetriebes 16, und somit auch mit dem Planetenträger 336 des ersten Radsatzes 326 des zweiten Teilgetriebes 16, verbunden. Durch Schließen der Gangkupplung 370 wird die zweite Getriebeeingangswelle 20 drehfest mit dem Sonnenrad 338 des zweiten Radsatzes 328 des zweiten Teilgetriebes 16 verbunden.

Wie bereits zum ersten Teilgetriebe 14 angemerkt, gilt auch beim zweiten Teilgetriebe 16, dass im Fahrbetrieb bzw. zum Fahrbetrieb gleiche Bauteile nicht gleichzeitig durch Schließen entsprechender Kupplungen mit der zweiten Getriebeeingangswelle 20 gekoppelt sein dürfen und gleichzeitig gegenüber dem Gehäuse festgesetzt sein dürfen, sofern über dieses zweite Teilgetriebe 16 ein Drehmoment zum Fahren übertragen werden soll. Dennoch können solche Verschaltungen beispielsweise verwendet werden, um als Wegfahrsperre oder dergleichen zu dienen.

Es ist eine Schiebemuffe 378 vorgesehen, die drehfest und axial verschieblich am Gehäuse 86 angeordnet ist, und über welche wahlweise entweder die Gangkupplung 362 oder die Gangkupplung 364 geschlossen werden kann. Ferner ist eine Schiebemuffe 380 vorgesehen, die drehfest und axial verschieblich an der zweiten Getriebeeingangswelle 20 bzw. an dem hieran angeordneten Fortsatz 382 angeordnet ist. Mittels dieser Schiebemuffe 380 kann wahlweise entweder die Gangkupplung 366 oder die Gangkupplung 368 geschlossen werden. Überdies ist eine Schiebemuffe 384 vorgesehen, die ebenfalls axial verschieblich und drehfest an der zweiten Getriebeeingangswelle 20 bzw. deren Fortsatz 382 angeordnet ist, und mittels welcher die Gangkupplung 370 geschlossen werden kann.

Im Ausführungsbeispiel gemäß Fig. 10 sind die Schiebemuffen bzw. die Gangkupplungen radial nach außen gezogen. Dies ist hier so, dass radial innerhalb einer jeweiligen Schiebemuffe bzw. Gangkupplung zumindest eines der Hohlräder angeordnet ist. Dies kann aber auch anders gestaltet sein.

Ferner ist ein Schaltaktor bzw. eine Betätigungseinrichtung 50 vorgesehen, die hier schematisch angedeutet ist. Diese Betätigungseinrichtung kann beispielsweise im wesentlichen so gestaltet sein, wie es bereits der Fig. 1 bis 7 erläutert wurde, wobei selbstverständlich eine Anpassung an die Lage der entsprechenden Schiebemuffen zu erfolgen hat. Es kann aber auch ein anders gearteter Schaltaktor bzw. eine anders geartete Betätigungseinrichtung 50 vorgesehen sein, die beispielsweise auch Schaltgabeln oder dergleichen aufweisen kann. Der Schaltaktor bzw. die Betätigungseinrichtung 50 kann beispielsweise elektromechanischer Art sein und insbesondere so ausgebildet sein, dass sie genau einen Elektromotor zum Betätigen sämtlicher Gangkupplungen des ersten Teilgetriebes 14 und zweiten Teilgetriebes 16 aufweist.

In den Ausführungsbeispielen gemäß Fig. 1 bis 7 bzw. Fig. 9 bzw. Fig. 10 ist insbesondere vorgesehen, dass die dortigen Gangkupplungen für das Ein- und Auslegen der Gänge des jeweiligen ersten Teilgetriebes 14 - also insbesondere die Abschnitte bzw. Flächen der Gangkupplungen, die im geschlossenen Zustand der jeweiligen Gangkupplung für die Drehmomentübertragung einander kontaktieren und im geöffneten Zustand der jeweiligen Gangkupplung für das Verhindern einer Drehmomentübertragung einander nicht kontaktieren - des jeweiligen ersten Teilgetriebes 14 radial außerhalb der Verzahnung zumindest eines Sonnenrades des betreffenden ersten Teilgetriebes angeordnet sind. Dies ist in den genannten Gestaltungen sogar so, dass jeweils sämtliche Gangkupplungen - bzw. die angesprochenen Flächen bzw. Abschnitte - für das Ein- und Auslegen der Gänge des jeweiligen ersten Teilgetriebe 14 radial außerhalb der Verzahnungen sämtlicher Sonnenräder des jeweiligen ersten Teilgetriebes angeordnet sind. Die angesprochenen Verzahnungen sind dabei insbesondere solche, welche in ein Verzahnung von Planetenrädern eingreifen.

Ferner ist in den Ausführungsbeispielen gemäß Fig. 1 bis 7 bzw. Fig. 9 bzw. Fig. 10 insbesondere vorgesehen, dass die dortigen Gangkupplungen für das Ein- und Auslegen der Gänge des jeweiligen zweiten Teilgetriebes 14 - also insbesondere die Abschnitte bzw. Flächen der Gangkupplungen, die im geschlossenen Zustand der jeweiligen Gangkupplung für die Drehmomentübertragung einander kontaktieren und im geöffneten Zustand der jeweiligen Gangkupplung für das Verhindern einer Drehmomentübertragung einander nicht kontaktieren - des jeweiligen zweiten Teilgetriebes 16 radial außerhalb der Verzahnung zumindest eines Sonnenrades des betreffenden zweiten Teilgetriebes angeordnet sind. Dies ist in den genannten Gestaltungen sogar so, dass jeweils sämtliche Gangkupplungen - bzw. die angesprochenen Flächen bzw. Abschnitte - für das Ein- und Auslegen der Gänge des jeweiligen zweiten Teilgetriebes 16 radial außerhalb der Verzahnungen sämtlicher Sonnenräder des jeweiligen zweiten Teilgetriebes angeordnet sind. Die angesprochenen Verzahnungen sind dabei insbesondere solche, welche in ein Verzahnung von Planetenrädern eingreifen.

In den Ausführungsbeispielen gemäß Fig. 1 bis 7 bzw. Fig. 9 bzw. Fig. 10 ist insbesondere vorgesehen, dass die dortigen Gangkupplungen für das Ein- und Auslegen der Gänge des jeweiligen ersten Teilgetriebes 14 - also insbesondere die Abschnitte bzw. Flächen der Gangkupplungen, die im geschlossenen Zustand der jeweiligen Gangkupplung für die Drehmomentübertragung einander kontaktieren und im geöffneten Zustand der jeweiligen Gangkupplung für das Verhindern einer Drehmomentübertragung einander nicht kontaktieren - des jeweiligen ersten Teilgetriebes 14 radial außerhalb der Verzahnung des (Fig. 1 bis 7 bzw. Fig. 9) bzw. zumindest eines Hohlrades (Fig. 10) des betreffenden ersten Teilgetriebes angeordnet sind. Dies ist in der Gestaltungen gemäß Fig. 10 sogar so, dass jeweils sämtliche Gangkupplungen - bzw. die angesprochenen Flächen bzw. Abschnitte - für das Ein- und Auslegen der Gänge des jeweiligen ersten Teilgetriebe 14 radial außerhalb der Verzahnungen sämtlicher ― hier insbesondere zwei - Hohlräder des jeweiligen ersten Teilgetriebes angeordnet sind. In der Gestaltung gemäß Fig. 10 gilt das Vorgesagte zusätzlich für die Gangkupplungen zum Ein-und Auslegen der Gänge des zweiten Teilgetriebes 16 in Bezug auf die Hohlräder des zweiten Teilgetriebes 16. Alternativ können auch die Gestaltungen gemäß Fig. 1 bis 7 bzw. 9 so ausgebildet sein, dass auch dort die Gangkupplungen zum Ein- und Auslegen der Gänge des zweiten Teilgetriebes 16 radial außerhalb der Verzahnung des dortigen Hohlrades gelegen sind. Die angesprochenen Verzahnungen sind dabei insbesondere solche, welche in ein Verzahnung von Planetenrädern eingreifen.

In den Ausführungsbeispielen gemäß Fig. 1 bis 7 bzw. Fig. 9 bzw. Fig. 10 ist insbesondere vorgesehen, dass diejenigen der dortigen Gangkupplungen für das Ein- und Auslegen von Gängen, die eine drehfeste Verbindung zwischen einem Bauteil des jeweiligen Planetengetriebes und einer Getriebeeingangswelle erzeugen können, so ausgebildet und angeordnet sind, dass sie (im geschlossenen Zustand) ein Drehmoment übertragen können, wobei dieses Drehmoment von der betreffenden Getriebeeingangswelle in einem Bereich in Gangkupplung bzw. deren jeweilige Schiebemuffe eingeleitet wird, der weiter radial außen gelegen ist als die Abschnitte bzw. Flächen der Gangkupplung, die bei geschlossener Gangkupplung für die Drehmomentübertragung einander kontaktieren und bei geöffneter Gangkupplung für das Verhindern einer Drehmomentübertragung einander nicht kontaktieren.

Im Ausführungsbeispiel gemäß Fig. 1 bis Fig. 7 ist ein hohles bzw. im Wesentlichen hohlzylindrisches Bauteil der Betätigungseinrichtung 50 gegeben, das im dortigen Beispiel die erste Schaltwalze 158 ist, und das sich um das erste Planetengetriebe 28 des ersten Teilgetriebes erstreckt bzw. radial außen erstreckt. Es ist insbesondere vorgesehen, dass mittels dieses Bauteils bzw. Schaltwalze Gangkupplungen betätigt werden können. Diese Bauteils ist beweglich, hier drehbeweglich in Umfangsrichtung und axialfest, angeordnet. Ein solches hohles Bauteil der Betätigungseinrichtung 50, das sich um das erste 28 bzw. zweite Planetengetriebe 30 erstreckt und beweglich angeordnet ist, ist in den Fig. 9 und Fig. 10, wo die Betätigungseinrichtung 50 nur schematisch angedeutet ist, nicht gezeigt, kann dort aber in bevorzugter Gestaltung auch gegeben sein.

Im Ausführungsbeispiel gemäß Fig. 1 bis Fig. 7 ist ferner genau ein Elektromotor 52 gegeben, mittels welchem sämtliche Gänge des ersten Planetengetriebes 28 bzw. Teilgetriebes 14 und des zweiten Planetengetriebes 30 bzw. Teilgetriebes 16 ein- und auslegbar sind, und mittels welchem sämtliche Wählvorgänge zugehörigen durchführbar sind. Ein solcher Elektromotor 52 mit der angesprochen Funktionalität ist in den Fig. 9 und 10 nicht gezeigt, kann dort allerdings in bevorzugter Gestaltung ebenfalls gegeben sein.

In den Ausführungsbeispielen gemäß Fig. 1 bis 7 bzw. Fig. 9 bzw. Fig. 10 ist insbesondere vorgesehen, dass ein bzw. das Hohlrad des ersten Teil- 14 bzw. Planetengetriebes 28 mit einem bzw. dem Hohlrad des zweiten Teil- 16 bzw. Planetengetriebes 30 drehfest gekoppelt ist.

Wie insbesondere den Ausführungsbeispielen gemäß den Fig. 1 bis 10 entnommen werden kann, wird durch die Erfindung ermöglicht, die Vorteile eines Lastschaltgetriebes mit den geringen Kosten, dem geringen Gewicht und der Robustheit eines Planetengetriebes zu verbinden. Ferner ermöglichen die Gestaltungen gemäß diesen Ausführungsbeispielen eine verbesserte Kraftstoffökonomie sowie verringerte Kosten und ein verringertes Gewicht im Vergleich zu Automatengetrieben, die Planetensätze aufweisen.

Wie die Ausführungsbeispiele gemäß der Fig. 1 bis 10 zeigen, können bei einem erfindungsgemäßen Getriebe zwei miteinander verbundene bzw. gekoppelte Planetengetriebe vorgesehen sein, die jeweils eine eigene Getriebeeingangswelle aufweisen. Ferner kann - optional - ein Drehmomentwandler vorgesehen sein. Weiter können insbesondere Kupplungen bzw. eine Doppelkupplung, wobei diese Kupplungen insbesondere Nasskupplungen sein können, vorgesehen sein, sowie synchronisierte Gangkupplungen, die insbesondere als Klauenkupplungen ausgebildet sein können. Überdies kann ein elektromotorischer bzw. elektromechanischer Aktor bzw. Betätigungseinrichtung vorgesehen sein und eine Übertragungskette. In diesen Ausführungsbeispielen gemäß den Fig. 1 bis 10 ist ein Planetengetriebe insbesondere dazu bestimmt, die ungeraden Gänge, insbesondere die Gänge "1", "3" und "5", zu erzeugen. Das andere Planetengetriebe ist insbesondere vorgesehen, um die geraden Gänge, insbesondere die Gänge "2", "4" und "6" sowie den Rückwärtsgang, zu erzeugen. Es kann ― wie eines dieser Ausführungsbeispiele zeigt, was allerdings auch bei den anderen Ausführungsbeispielen gegeben sein kann - vorgesehen sein, dass die ungeraden Gänge mit einem Drehmomentwandler verbunden werden können, und zwar beispielsweise zum Starten bzw. Anfahren. Ein solcher Drehmomentwandler kann geschlossen und/oder überbrückt werden mit einer einfachen Kupplung. Die geraden Gänge können ― wie die Ausführungsbeispiele zeigen - mit einer einfachen Kupplung verbunden werden, die - sofern vorhanden - das Wandlergehäuse mit der Eingangswelle verbindet. Die Planetensätze bzw. Planetengetriebe können ein gemeinsames Ausgangsteil teilen bzw. entsprechend verbunden sein, wie auch aus diesen Ausführungsbeispielen entnommen werden kann. Das Ausgangsdrehmoment kann - wie auch den Ausführungsbeispielen entnommen werden kann - zu einem Differential übertragen werden, wozu beispielsweise eine Übertragungskette - insbesondere in Vorderrad-betriebenen Fahrzeugen - vorgesehen sein kann. Die synchronisierten Gangkupplungen, insbesondere synchronisierte Klauenkupplungen, sind insbesondere vorgesehen, um die verschiedenen Elemente der Planetengetriebe zu koppeln.

Die Gangkupplungen bzw. Klauenkupplungen und - sofern vorhanden - Drehmomentwandlerkupplungen können mittels eines elektromechanischen Aktors bzw. mittels einer elektromechanische Betätigungseinrichtung betätigt werden. Der Wandler - sofern vorhanden - kann beispielsweise - was bislang noch nicht angesprochen wurde - mittels einer Pumpe, insbesondere einer kleinen Pumpe, versorgt und gekühlt werden.

Es sei angemerkt, dass verschiedene Varianten dieses Systems möglich sind, wie beispielsweise solche, die lediglich Anfahrkupplungen anstelle des Wandlers verwenden und/oder verschiedene Layouts der Planetengetriebe aufweisen und/oder verschiedene Betätigungsprinzipien bzw. Betätigungseinrichtungen aufweisen.

Insbesondere die Gestaltungen gemäß den Fig. 1 bis 10 zeigen, dass erfindungsgemäß - zumindest in bevorzugten Gestaltungen - besondere Vorteile erreicht werden. Im Folgenden sollen einige dieser Vorteile genannt werden, wobei anzumerken ist, dass nicht jede Ausführungsform der Erfindung sämtliche dieser Vorteile aufweisen muss. Unter die Erfindung können vielmehr auch solche Gestaltungen fallen, die diese Vorteile nicht oder nur teilweise aufweisen.

Beispielsweise sind die gesamten Getriebekosten geringer als bei typischen Automatengetrieben. Das Gewicht kann deutlich im Vergleich zu konventionellen Automatengetrieben oder stufenlosen Getrieben (CVT) oder Lastschaltgetriebe verringert werden. Die Erfindung ermöglicht weiter, die Länge des Getriebes deutlich kürzer zu gestalten als bei anderen Getriebetypen, was beispielsweise für Vorderrad-getriebene Fahrzeuge von Bedeutung sein kann. Die Kraftstoffökonomie kann in dem Bereich eines nassen Lastschaltgetriebes verbessert werden oder sogar noch besser gestaltet werden. Das verringerte Gewicht kann dabei im Hinblick auf die Kraftstoffökonomie bedeutsam sein. Weiter kann ermöglicht werden, dass kein besonderes Kühlsystem der Kupplungen erforderlich ist. Es kann vorgesehen sein, dass die Anfahrenergie durch den Wandler - sofern vorhanden - absorbiert wird. Überdies kann die Gestaltung so sein, dass die Schaltenergie deutlich verringert ist, was gut durch die Kupplungen gehandelt werden kann. Ereignisse, die eine hohe Energie erfordern, wie beispielsweise das Abwürgen des Motors oder das Halten am Berg, können einfach wie in bekannten Automatengetrieben mittels des Drehmomentwandlers - sofern vorhanden - absorbiert werden wie in bekannten Automatengetrieben.

Das Anfahren, ein Kriechen sowie eine Hill-Holder-Funktion können leicht gesteuert bzw. realisiert werden und sind stabil, und zwar insbesondere aufgrund der Drehmomentwandler-Anfahreinrichtung ― sofern vorhanden. Es können bei diesen Gestaltungen auch Kurbelwellen-Startergeneratoren (CSG) eingesetzt werden. Bei diesen Gestaltungen können auch hierbei die Kosten für den Erstausstatter reduziert werden.

Es ist besonders vorteilhaft, zwei Planetengetriebe mit einer Doppelkupplung und einem elektromechanischen Betätigungssystem zur Reduzierung der Kosten, der Länge und des Gewichts eines Lastschaltgetriebes einzusetzen.

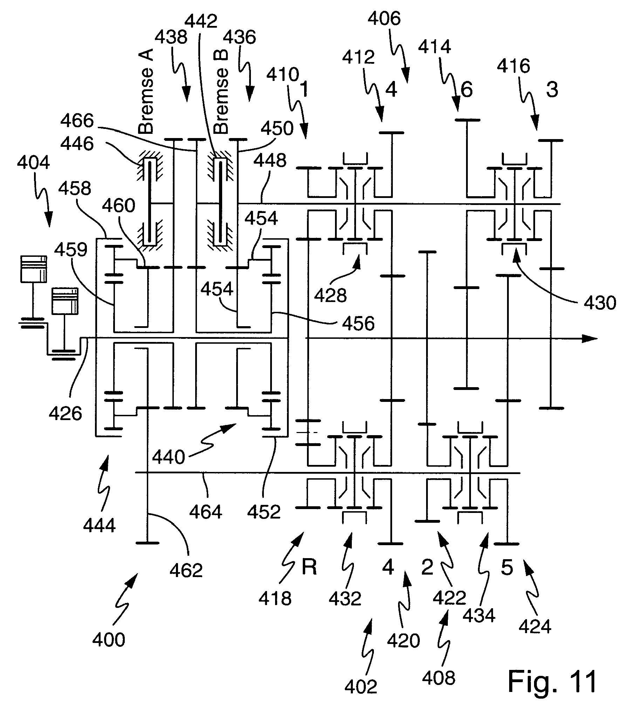

Die Fig. 11 bis 14 zeigen beispielhafte erfindungsgemäße Kraftfahrzeug-Antriebsstränge 400 mit beispielhaften erfindungsgemäßen Kraftfahrzeuggetrieben 402.

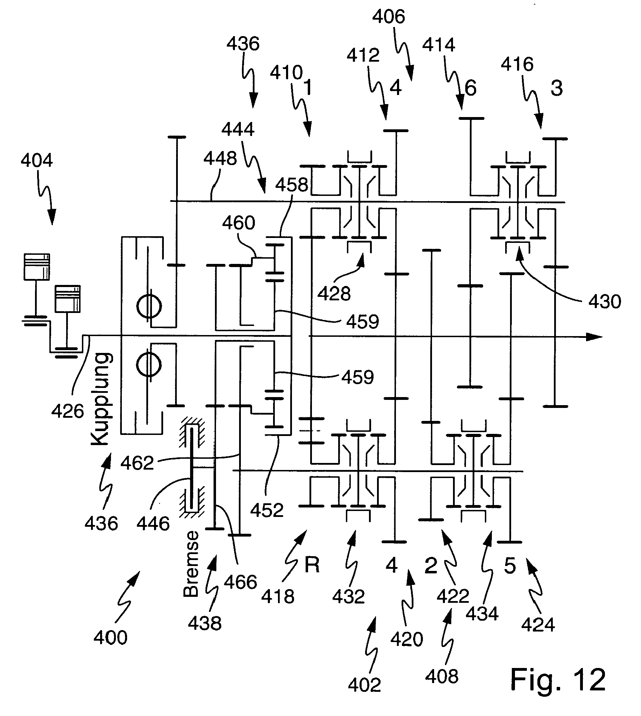

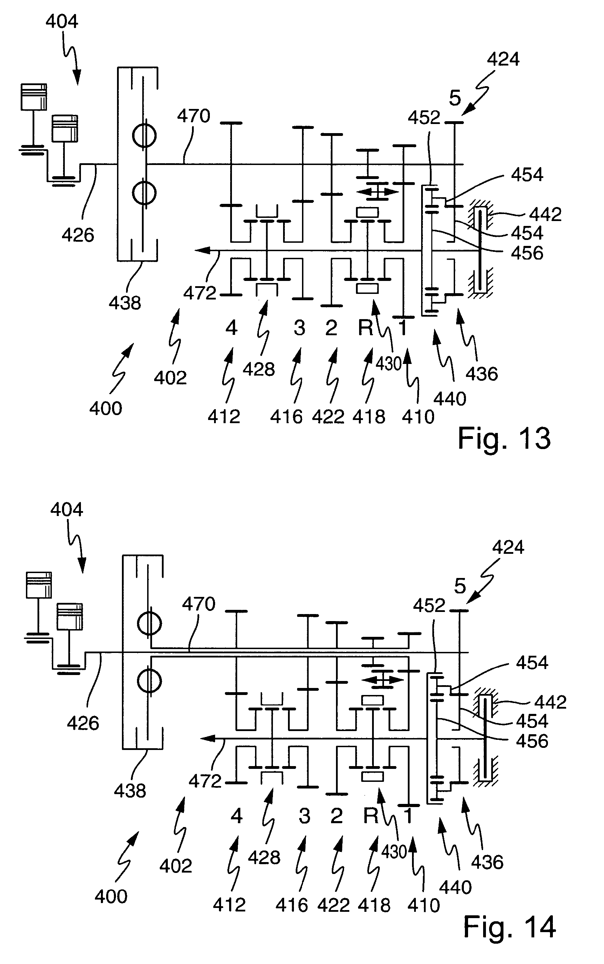

In den Ausführungsbeispielen gemäß den Fig. 11 und 12 ist das Kraftfahrzeuggetriebe 402 jeweils als Doppelkupplungsgetriebe bzw. Lastschaltgetriebe ausgebildet. In den Ausführungsbeispielen gemäß den Fig. 13 und 14 ist das Kraftfahrzeuggetriebe 402 jeweils als unterbrechungsfreies Schaltgetriebe (USG) ausgebildet.

Es ist eine Brennkraftmaschine 404 vorgesehen, mittels welcher der Antriebsstrang 400 angetrieben werden kann. Das Kraftfahrzeuggetriebe 402 weist eine Vielzahl von Radsätzen 410, 412, 414, 416, 418, 420, 422, 424 zur Bildung von Gängen auf. Der Teil des Kraftfahrzeuggetriebes, in dem die Gänge gebildet werden, ist in Vorgelegebauweise gestaltet. Bei den Gestaltungen gemäß den Fig. 11 und 12 ist vorgesehen, dass das Kraftfahrzeuggetriebe ein erstes Teilgetriebe 406 aufweist sowie ein zweites Teilgetriebe 408, das parallel zum ersten Teilgetriebe 406 geschaltet ist.

Die in diesen Ausführungsbeispielen schaltbaren Gänge sind symbolisch durch die entsprechende Gangnummer bzw. durch den Buchstaben "R" angegeben, der für den Rückwärtsgang steht. In diesem Zusammenhang sei angemerkt, dass die Gangzahl allerdings auch anders gestaltet sein kann.

Im Ausführungsbeispiel gemäß den Fig. 11 und 12 ist die vierte Gang zweimal vorhanden, und zwar einmal in dem ersten Teilgetriebe 406 und einmal in dem zweiten Teilgetriebe 408.

In den Ausführungsbeispielen gemäß den Fig. 11 bis 14 ist eine Motorausgangswelle 426 der Brennkraftmaschine 404 gegeben.

Ferner sind in diesen Gestaltungen Gangkupplungen 428, 430, 432, 434 gegeben. Diese Gangkupplungen 428, 430, 432, 434 sind insbesondere mit Synchronisationseinrichtungen versehen. Sie sind insbesondere so gestaltet, dass über diese Gangkupplungen 428, 430, 432, 434 zum Einlegen eines Ganges zwischen einem Zahnrad eines jeweiligen Radsatzes und einer dieses Zahnrad tragenden Welle erzeugt werden kann und zum Auslegen des Ganges gelöst werden kann.

In den Ausführungsbeispielen gemäß den Fig. 11 bis 14 sind ferner jeweils zwei Drehmomentübertragungseinrichtungen 236, 238 vorgesehen, die als Kupplung wirken. In diesem Zusammenhang sei allerdings angemerkt, dass auch Ausführungsbeispiele unter die Erfindung fallen, die nur eine als Kupplung wirkende Drehmomentübertragungseinrichtung aufweisen oder die drei oder mehr als Kupplung wirkende Drehmomentübertragungseinrichtungen aufweisen.

Es ist vorgesehen in den Ausführungsbeispielen gemäß Fig. 11 bis 14 - und dies gilt auch, sofern mehr als zwei Drehmomentübertragungseinrichtungen, die als Kupplung wirken, vorgesehen sind bzw. nur eine vorgesehen ist -, dass zumindest eine der als Kupplung wirkenden Drehmomentübertragungseinrichtungen 236, 238 von einem Planetengetriebe und einer Bremseinrichtung gebildet wird.

In der Gestaltung gemäß den Fig. 11 und 12 ist die erste Drehmomentübertragungseinrichtung 436 mit dem ersten Teilgetriebe 406 verbunden und die zweite Drehmomentübertragungseinrichtung 438 mit dem zweiten Teilgetriebe 408 verbunden.

Im Ausführungsbeispiel gemäß Fig. 11 ist vorgesehen, dass die erste 436 und die zweite Drehmomentübertragungseinrichtung 438 jeweils von einem Planetengetriebe 440 bzw. 444 und einer Bremseinrichtung 442 bzw. 446 gebildet werden. Dabei ist vorgesehen, dass das erste Planetengetriebe 440 mit einem Eingangsteil und einem Ausgangsteil verbunden ist und das zweite Planetengetriebe 444 ebenfalls mit einem Eingangsteil und mit einem Ausgangsteil verbunden ist. Die Verbindung ist so, dass ein Drehmoment übertragen werden kann. Es kann eine feste Verbindung sein oder auch beispielsweise eine Zahnradverbindung. Im Ausführungsbeispiel gemäß Fig. 11 ist vorgesehen, dass das Hohlrad 452 des ersten Planetengetriebes 440 fest mit der Motorausgangswelle 426 verbunden ist, die hier das Eingangsteil für das erste Planentengetriebe 440 bildet, und der Planetenträger 454 des ersten Planetengetriebes 440 mit einem auf einer ersten Welle 448 des ersten Teilgetriebes 406 sitzenden Zahnrads 450 verbunden ist. Dies ist hier so, dass der Planetenträger 454 eine zusätzliche Verzahnung aufweist, die in die Verzahnung dieses Zahnrades 450, die hier ein Ausgangsteil für das erste Planentengetriebe 440 bildet, eingreift.

Bezogen auf eine Gruppe von beweglich angeordneten Bauteilen des ersten Planetengetriebes 440, die das Hohlrad 452, den Planetenträger 454 und das Sonnenrad 456 dieses ersten Planetengetriebes 440 umfasst, ist das Teil - hier das Sonnenrad 456 -, das weder mit dem Eingangsteil für das erste Planetengetriebe 440, das hier von der Motorausgangswelle 426 gebildet wird, noch mit dem Ausgangsteil für das erste Planetengetriebe 440, das hier vom Zahnrad 450 gebildet wird, verbunden ist, mit der Bremseinrichtung 442 verbunden. Die Verbindung ist hier insbesondere so, dass die Bremseinrichtung 442 auf dieses Bauteil ― hier das Sonnenrad 456 ― einwirken kann.

In Bezug auf das zweite Planetengetriebe 444 der zweiten Drehmomentübertragungseinrichtung 438 bildet die Motorausgangswelle 426 in der Gestaltung gemäß Fig. 11 ebenfalls bzw. in der Gestaltung gemäß Fig. 12 ein Eingangsteil für das zweite Planetengetriebe 442. Mit diesem Eingangsteil 426 für das zweite Planetengetriebe 442 ist das Hohlrad 458 des zweiten Planetengetriebes 444 der zweiten Drehmomentübertragungseinrichtung 438 fest verbunden. Dieses zweite Planetengetriebe 444 weist ferner ein Sonnenrad 459 und einen Planetenträger 460 auf. Der Planetenträger 460 ist im Ausführungsbeispiel gemäß Fig. 11 oder Fig. 12 mit einem das Ausgangsteil für das zweite Planetengetriebe 442 bildenden Zahnrad 462 verbunden, das hier auf einer zweiten Welle 464 des zweiten Teilgetriebes 408 sitzt.

Das somit weder mit dem Eingangsteil noch mit dem Ausgangsteil verbundene Sonnenrad 459 des zweiten Planetengetriebes ist in den Gestaltungen gemäß Fig. 11 bzw. Fig. 12 mit der zweiten Bremseinrichtung 446 verbunden. Das Sonnenrad 459 weist eine zusätzliche Verzahnung auf, die in ein weiteres Zahnrad 466 eingreift, auf welches diese zweite Bremseinrichtung 446 wirken kann.

Im Ausführungsbeispiel gemäß Fig. 12 ist vorgesehen, dass die erste Drehmomentübertragungseinrichtung 436 als "normale" Kupplung, wie beispielsweise Reibungskupplung, ausgebildet ist. Die zweite Drehmomentübertragungseinrichtung 438 wird hier von einem Planetengetriebe 444 und einer Bremseinrichtung 446 gebildet. Die Verschaltung des Planetengetriebes 444 und dieser Bremseinrichtung 446 entspricht im wesentlichen der, die bereits in Fig.

11 in Bezug auf die zweite Drehmomentübertragungseinrichtung erläutert wurde. Im Unterschied zur Fig. 11, wo beide Kupplungen der Doppelkupplungsanordnung durch ein Planetengetriebe und eine Bremseinrichtung ersetzt sind, ist in der Gestaltung gemäß Fig. 12 lediglich eine Kupplung der Doppelkupplungseinrichtung durch ein Planetengetriebe und eine Bremseinrichtung ersetzt.

Die Funktionalität und die Schaltstrategien für die Gestaltungen gemäß den Fig. 11 und 12 können im wesentlichen so sein, wie es bereits für Doppelkupplungsgetriebe bekannt ist. Es ist also insbesondere vorgesehen, dass diese Anordnungen, bei denen eine Kupplung, wie Reibungskupplung, durch eine als Kupplung wirkende Drehmomentübertragungseinrichtung ersetzt ist, die ein Planetengetriebe und eine Bremseinrichtung aufweist, im wesentlichen die gleiche Funktion und die gleichen Schaltstrategien haben wie solche Gestaltungen, bei denen sämtliche Drehmomentübertragungseinrichtungen als Kupplung, wie Reibungskupplung oder dergleichen, ausgebildet sind.

Wie bereits angesprochen, zeigen die Fig. 13 und 14 jeweils einen Antriebsstrang 400 in teilweiser Darstellung, bei dem eine Kraftfahrzeuggetriebeeinrichtung gegeben ist, die als unterbrechungsfreies Schaltgetriebe (USG) gestaltet ist.

Bei den Gestaltungen gemäß den Fig. 13 und 14 ist zwischen der Motorausgangswelle 426 und einer (ersten) Getriebeeingangswelle 470 eine zweite Drehmomentübertragungseinrichtung 438 vorgesehen. Diese zweite Drehmomentübertragungseinrichtung 438 ist hier eine Anfahrkupplung bzw. wirkt als Anfahrkupplung. Die zweite Drehmomentübertragungseinrichtung 438 kann beispielsweise eine Reibungskupplung sein. Von der Getriebeeingangswelle 470 werden mehrere Zahnräder der die Gänge bildenden Radsätze getragen.

In der Gestaltung gemäß Fig. 13 ist dies so, dass von jedem der Gänge bildenden Radsätze ein Rad von der Getriebeeingangswelle 470 getragen wird.

Bei der Gestaltung gemäß Fig. 14 ist dies so, dass, abgesehen vom höchsten Vorwärtsgang, der hier beispielhaft der fünfte Gang ist, ein Zahnrad von jedem der verbleibenden Radsätze, die Gänge bilden, von der Getriebeeingangswelle 470 getragen wird.

Bei der Gestaltung gemäß Fig. 14 ist die (erste) Getriebeeingangswelle 370 als Hohlwelle ausgebildet. Durch diese Hohlwelle durch erstreckt sich die Motorausgangswelle 426 oder eine von dieser angetriebenen Welle. Auf dieser Motorausgangwelle 426 bzw. einer damit gekoppelten Welle sitzt ein Zahnrad des Radsatzes für den höchsten Gang.

Ferner weisen die Gestaltungen gemäß den Fig. 13 und 14 eine Getriebeausgangswelle 472 auf.

In der Gestaltung gemäß Fig. 14 kann die Motorausgangswelle 426 bzw. - sofern dies der Fall ist - eine hiermit verbundene Welle auch als (zweite) Eingangswelle bzw. Getriebeeingangswelle bezeichnet werden, und zwar insbesondere als Eingangswelle für den Radsatz des fünften Ganges.

Zwischen dieser (zweiten) Eingangswelle 426 (Fig. 14) bzw. (ersten) Getriebeeingangswelle 470 (Fig. 13) und der Getriebeausgangswelle 472 ist eine erste Drehmomentübertragungseinrichtung 436 vorgesehen, die von einem Planetengetriebe 440 und einer hiermit zusammenwirkenden Bremseinrichtung 442 gebildet wird.

Dabei ist hier vorgesehen, dass das Hohlrad 452 dieses Planetengetriebes 440 mit der Getriebeausgangswelle 472, die hier ein Ausgangsteil für das erste Planetengetriebes 440 bildet, fest verbunden ist. Der Planetenträger 454 dieses ersten Planetengetriebes 440 weist eine zusätzliche Verzahnung auf, welche in die Verzahnung eines auf der Welle 426 (Fig. 14) bzw. 470 (Fig. 13) getragenen Zahnrades, welches dem Radsatz 424 zugeordnet ist, eingreift. Dieses Zahnrad bildet ein Eingangsteil für das erste Planetengetriebe 440, so dass der Planetenträger 454 mit dem Eingangsteil verbunden ist. Das Sonnenrad 456 des Planetengetriebes 440 ist mit der Bremseinrichtung 442 verbunden.

Die erste Drehmomentübertragungseinrichtung 436 wirkt in den Gestaltungen gemäß Fig. 13 und 14 als Lastschaltkupplung. Bei der Gestaltung gemäß Fig. 13 bzw. Fig. 14 ist also vorgesehen, dass zugkraftunterbrechungsfrei zwischen Gängen gewechselt werden kann. Hierbei kann zwischenzeitlich über die höchste Gangstufe, also hier den fünften Gang, ein Drehmoment übertragen werden. Mittels dieser als Lastschaltkupplung wirkenden ersten Drehmomentübertragung 436 kann ferner in bevorzugter Gestaltung eine Drehzahlanpassung beim Schalten bewirkt werden.

Wie die Fig. 13 und 14 zeigen, ist bei diesen Ausführungsbeispielen die USG-Kupplung bzw. Lastschaltkupplung, die bei bekannten unterbrechungsfreien Schaltgetrieben (USG) gegeben ist, ersetzt durch ein Planetengetriebe 440 und eine Bremseinrichtung 442. Das Planetengetriebe ist bei diesen Ausführungsformen zwischen eine Eingangswelle 470 (Fig. 13) bzw. die Motorausgangs- bzw. Kurbelwelle 426 (Fig. 14) und eine Ausgangswelle 472 geschaltet bzw. mit diesen verbunden.

In vorteilhafter Gestaltung sind Funktionalitäten und Schaltstrategien bei den Gestaltungen gemäß den Fig. 13 und 14 so, wie es in bekannten unterbrechungsfreien Schaltgetrieben, die eine USG-Kupplung bzw. Lastschaltkupplung verwenden, gegeben ist.

Insbesondere bei den beispielhaften Gestaltungen gemäß den Fig. 13 und 14 wird eine Vielzahl unterschiedlicher Strategien und Varianten für die Positionierung der Planetengetriebesätze und der Bremseinrichtungen ermöglicht. Der Planetengetriebesatz kann beispielsweise auch mit der Motorausgangswelle 426 bzw. der Kurbelwelle verbunden sein, und / oder mit einer Eingangswelle 470 und / oder mit einer Ausgangswelle 472. Ferner könnte beispielsweise vorgesehen sein, dass das Planetengetriebe 440 auch mit Gängen oder Zahnrädern verbunden sein könnte oder mit den Gängen im Planetengetriebe, die mit den Bremsen verbunden sind. Die Gestaltungen ermöglichen, die Bremseinrichtung außerhalb (Trockenbremse) oder innerhalb (Nassbremse) des Getriebes bzw. des Getriebegehäuses zu positionieren, wobei gegebenenfalls Welle und Zahnräder ― insbesondere als Übertragungsstrecke - verwendet werden. Die Bremseinrichtung ermöglicht einen hohen Grad an Freiheit für ihre Positionierung, wobei beispielsweise Wellen oder Zahnräder verwendet werden können. Wie insbesondere auch in den Gestaltungen gemäß Fig. 11 und 12 wird auch bei diesen Gestaltungen gemäß Fig. 13 und 14 ermöglicht, eine E-Maschine mit der Motorausgangswelle bzw. einer Kurbelwelle bzw. einer oder mehreren von den innerhalb des Getriebes bzw. des Getriebegehäuses angeordneten Wellen zu verbinden, wo alle Wellen und Gänge bzw. Zahnräder geschmiert sind bzw. geölt sind oder geschmiert oder geölt sein können, da sie alle innerhalb des Getriebegehäuses angeordnet sind bzw. werden können.

Diese Gestaltungen können insbesondere als elektronisches Schaltgetriebe (ESG) ausgebildet sein.

Wie insbesondere die Gestaltungen gemäß den Fig. 11 bis 14 zeigen, wird eine Vielzahl von Vorteilen ermöglicht. In diesem Zusammenhang sei allerdings angemerkt, dass diese Vorteile nicht immer vorhanden sein müssen, so dass auch Gestaltungen unter die Erfindung fallen, bei denen die Vorteile nicht gegeben sind oder nur einige der Vorteile gegeben sind.

Im Folgenden sollen nun einige beispielhafte Vorteile erwähnt werden: So wird beispielsweise eine verbesserte Verteilung der Wärme, die durch Reibungskräfte bedingt ist, ermöglicht, da die Bremseinrichtung bzw. die Bremseinrichtungen 442, 446 auch außerhalb des Getriebegehäuses angeordnet werden können und dabei insbesondere als Trockenbremse ausgebildet sein können. Die Bremsen müssen auch nicht in Reihe mit den Wellen innerhalb des Getriebegehäuses angeordnet sein (Verwendung von eckigen Gängen). Ferner wird die Möglichkeit geschaffen, eine E-Maschine mit der Motorausgangswelle bzw. einer Kurbelwelle und einer oder mehreren Wellen, die beispielsweise völlig innerhalb des Getriebegehäuses geölt bzw. geschmiert werden, zu verbinden. Ferner wird ermöglicht, die Bremseinrichtung bzw. Bremseinrichtungen 442, 446 außerhalb des Getriebegehäuses zu positionieren, wodurch beispielsweise ermöglicht wird, verschlissene Teile der Bremseinrichtung auf einfache Weise auszuwechseln. Vorteilhaft ist ferner, dass ermöglicht wird, entweder Trockenbremsen oder Nassbremsen einzusetzen. Ermöglicht wird ferner, die axiale Baulänge zu verkürzen (zum Beispiel Kombination aus Massenschwungrad bzw. Zweimassenschwungrad mit einem Hohlrad des Planetengetriebes oder dergleichen).

Der Anmelderin ist zwar bekannt, dass bei Automatengetrieben Planetengetriebe mit einer Bremse, die als Nassbremse gestaltet ist, gekoppelt sind. Dort wird allerdings die Gestaltung nicht als Kupplung eingesetzt bzw. wirkt nicht als Kupplung.

Wie insbesondere die Fig. 11 bis 14 zeigen, kann also gemäß der Erfindung ein unterbrechungsfreies Schaltgetriebe bzw. Doppelkupplungsgetriebe dahingehend abgewandelt sein, dass eine oder mehrere der dortigen Kupplungen durch ein Planetengetriebe und eine Bremse ersetzt wird. Die Bremseinrichtung kann dabei insbesondere mit dem verbleibenden Zahnrad (hier Sonnenrad) im bzw. des Planetengetriebesatz(es) verbunden sein, also des Rades, das nicht mit der Eingangswelle (im Beispiel Hohlrad) oder der Ausgangswelle (im Beispiel Planetenträger) verbunden ist, wobei beispielhaft ermöglicht wird, dass diese Kombination als Kupplung wirkt. Diese Gestaltung, insbesondere die Gestaltung gemäß den Fig. 11 bis 14, kann auch als elektronisches Schaltgetriebe (ESG) ausgebildet sein. Es ist aber auch möglich, dass sie als bloßes Unterbrechungsschaltgetriebe oder als Doppelkupplungsgetriebe ausgebildet ist.

Es sei angemerkt, dass zu unterscheiden ist zwischen dem ersten bzw. zweiten Planetengetriebe zur Bildung von Gängen (z.B. Fig. 1 bis 10) und ersten bzw. zweiten Planetengetriebe, das im Zusammenwirken mit einer jeweiligen Bremseinrichtung als Kupplung wirkt.

### Bezugszeichenliste

- 1: Kraftfahrzeug-Antriebsstrang
- 2: Lastschaltgetriebe
- 10: Motorausgangswelle
- 12: Zweimassenschwungrad
- 14: erstes Teilgetriebe von 2
- 16: zweites Teilgetriebe von 2
- 18: erste Getriebeeingangswelle
- 20: zweite Getriebeeingangswelle
- 22: Doppelkupplung
- 24: erste Kupplung
- 26: zweite Kupplung
- 28: erstes Planetengetriebe
- 30: zweites Planetengetriebe
- 32: Hohlrad von 28
- 34: Hohlrad von 30
- 36: Fortsatz von 32, 34
- 38: Kette
- 40: Antriebsachsen
- 42: Radsatz
- 43: Radsatz von 28
- 44: Differential
- 45: Radsatz von 30
- 46: Sonnenrad von 42
- 47: gepunkteter Bereich mit 43 für die geraden Gänge
- 48: Planetenträger von 42
- 49: gepunkteter Bereich mit 45 für die ungeraden Gänge
- 50: Betätigungseinrichtung für 2
- 52: Elektromotor
- 54: Betätigungseinrichtung für 22
- 56: kleines Sonnenrad von 28
- 58: großes Sonnenrad von 28

- 60: kurzes Planetenrad von 28
- 62: langes Planetenrad von 28
- 64: Planetenträger von 28
- 68: Fortsatz von 56
- 70: Fortsatz von 58
- 72: erster Fortsatz von 64
- 74: zweiter Fortsatz von 64
- 76: Gangkupplung von 28
- 78: Gangkupplung von 28
- 80: Gangkupplung von 28
- 82: Gangkupplung von 28
- 84: Gangkupplung von 28
- 86: Gehäuse
- 88: kleines Sonnenrad von 30
- 90: großes Sonnenrad von 30
- 92: kurzes Planetenrad von 30
- 94: langes Planetenrad von 30
- 96: gemeinsamer Planetenträger von 30
- 100: Fortsatz von 88
- 102: Fortsatz von 90
- 104: erster Fortsatz von 96
- 106: zweiter Fortsatz von 96
- 108: Gangkupplung von 30
- 110: Gangkupplung von 30
- 112: Gangkupplung von 30
- 114: Gangkupplung von 30
- 116: Synchronisationsring von 76
- 118: Synchronisationsring von 78
- 120: Synchronisationsring von 80
- 122: Synchronisationsring von 82
- 124: Synchronisationsring von 84
- 126: Synchronisationsring von 108
- 128: Synchronisationsring von 110
- 130: Synchronisationsring von 112

- 132: Synchronisationsring von 114
- 134: Schiebemuffe von 76
- 136: Schiebemuffe von 78 und 80
- 138: Schiebemuffe von 82 und 84
- 140: Schiebemuffe von 108 und 110
- 142: Schiebemuffe von 112 und 114
- 144: Stift, Führungsstift
- 146: Stift, Führungsstift
- 148: Stift, Führungsstift
- 150: Stift, Führungsstift
- 152: Stift, Führungsstift
- 158: erste Schaltwalze
- 160: zweite Schaltwalze
- 162: Nut in 158
- 164: Nut in 158
- 166: Nut in 158
- 168: Nut in 158
- 170: Nut in 158
- 172: Nut in 158
- 174: Nut in 158
- 176: Nut in 158
- 178: Nut in 158
- 180: Nut in 158
- 182: Nut in 158
- 184: Nut in 158
- 186: Nut in 160
- 188: Nut in 160
- 190: Nut in 160
- 192: Nut in 160
- 194: Nut in 160
- 196: Nut in 160
- 198: Doppelpfeil
- 200: Pfeilspitze von 198 (Bewegungsrichtung für Schalten)
- 202: Pfeilspitze von 198 (Bewegungsrichtung für Wählen)

- 203: Bezugszeichen
- 204: Bereich
- 206: Verzahnung von 158
- 208: Verzahnung von 160
- 210: Elektromotorausgangswelle
- 212: verzahnte Welle
- 214: erster einseitig wirkender Freilauf
- 216: zweiter einseitig wirkender Freilauf
- 218: Schalt-Wähl-Welle
- 220: erstes Zahnrad auf 218
- 222: zweites Zahnrad auf 218
- 224: erste Gegenverzahnung
- 226: zweite Gegenverzahnung
- 228: Zahnrad
- 230: Zahnrad
- 232: Nut
- 234: Zahnrad an 46
- 236: Planetenrad von 42
- 238: Hohlrad von 42
- 240: Bereich
- 242: Wandabschnitt
- 244: Wandabschnitt
- 246: Bereich
- 248: Wandabschnitt
- 250: Wandabschnitt
- 260: Schiebemuffe
- 262: Fortsatz von 264
- 264: treibende Welle
- 266: Zahnrad
- 268: Synchronisierungsring
- 270: Schiebemuffe
- 272: Synchronisierungsring
- 274: Synchronisierungsring
- 276: Fortsatz von Zahnrad

- 278: Fortsatz von Zahnrad
- 280: axialer Zwischenraum
- 300: Drehmomentwandler
- 302: erster Radsatz von 14
- 304: zweiter Radsatz von 14
- 306: Sonnenrad 302
- 308: Sonnenrad 304
- 310: Planetenrad von 302
- 312: Planetenrad von 304
- 314: Hohlrad von 302
- 316: Hohlrad von 304
- 318: Planetenträger von 302
- 320: Planetenträger von 304
- 322: Fortsatz zwischen 314 und 320
- 324: Fortsatz zwischen 316 und 318
- 326: erster Radsatz von 16
- 328: zweiter Radsatz von 16
- 330: Sonnenrad 326
- 332: Planetenrad von 326
- 334: Hohlrad von 326
- 336: Planetenträger von 326
- 338: Sonnenrad 328
- 340: Planetenrad von 328
- 342: Hohlrad von 328
- 344: Planetenträger von 328
- 346: Fortsatz zwischen 334 und 344
- 348: Fortsatz zwischen 336 und 342
- 350: Fortsatz an 316, 334
- 352: Verzahnung an 350
- 354: Gangkupplung zwischen 18 und 316, 318
- 356: Gangkupplung zwischen 18 und 306
- 358: Gangkupplung zwischen 86 und 308
- 360: Gangkupplung zwischen 86 und 320, 314
- 362: Gangkupplung zwischen 86 und 336, 342

- 364: Gangkupplung zwischen 86 und 330
- 366: Gangkupplung zwischen 20 und 330
- 368: Gangkupplung zwischen 20 und 342, 336
- 370: Gangkupplung zwischen 20 und 338
- 372: Schiebemuffe von 14 an 374
- 374: Fortsatz an 318
- 376: Schiebemuffe von 14 an 86
- 378: Schiebemuffe von 16 an 86
- 380: Schiebemuffe von 16 an 20 bzw. 382
- 382: Fortsatz von 20
- 384: Schiebemuffe von 16 an 20 bzw. 382
- 400: Kraftfahrzeug-Antriebsstrang
- 402: Kraftfahrzeug-Getriebe
- 404: Brennkraftmaschine
- 406: erstes Teilgetriebe
- 408: zweites Teilgetriebe
- 410: Radsatz
- 412: Radsatz
- 414: Radsatz
- 416: Radsatz
- 418: Radsatz
- 420: Radsatz
- 422: Radsatz
- 424: Radsatz
- 426: Motorausgangswelle
- 428: Gangkupplungen
- 430: Gangkupplungen
- 432: Gangkupplungen
- 434: Gangkupplungen
- 436: erste Drehmomentübertragungseinrichtung
- 438: zweite Drehmomentübertragungseinrichtung
- 440: erstes Planetengetriebe
- 442: erste Bremseinrichtung
- 444: zweites Planetengetriebe

- 446: zweite Bremseinrichtung
- 448: erste Welle von 406
- 450: Zahnrad auf 448
- 452: Hohlrad von 440
- 454: Planetenträger von 440
- 456: Sonnenrad von 440
- 458: Hohlrad von 444
- 459: Sonnenrad von 444
- 460: Planetenträger von 444
- 462: Zahnrad auf 464
- 464: zweite Welle 408
- 466: Zahnrad
- 470: Getriebeeingangswelle
- 472: Getriebeausgangswelle

## Patentansprüche

1. Lastschaltgetriebe für Kraftfahrzeuge mit
- einem ersten Teilgetriebe, das ein (erstes) Planetengetriebe aufweist, wobei dieses erste Planetengetriebe wenigstens ein Sonnenrad, wenigstens ein Hohlrad, mehrere Planetenräder und wenigstens einen Planetenträger aufweist, wobei dieses wenigstens eine Sonnenrad eine Verzahnung für den Eingriff in Verzahnungen von Planetenrädern aufweist;
- mehreren Gangkupplungen für das Ein- und Auslegen von Gängen im ersten Teilgetriebe;
- einem zweiten Teilgetriebe,
- mehreren Gangkupplungen für das Ein- und Auslegen von Gängen im zweiten Teilgetriebe;
wobei das zweite Teilgetriebe parallel zum ersten Teilgetriebe geschaltet ist und wobei zumindest sämtliche Gangkupplungen für das Ein- und Auslegen von Gängen im ersten Teilgetriebe radial außerhalb dieser Verzahnung des wenigstens einen Sonnenrades dieses ersten Teilgetriebes angeordnet sind.

2. Lastschaltgetriebe nach Anspruch 1, **dadurch gekennzeichnet, dass** das wenigstens eine Hohlrad eine Verzahnung für den Eingriff in Verzahnungen von Planetenrädern aufweist und zumindest sämtliche Gangkupplungen für das Ein- und Auslegen von Gängen im ersten Teilgetriebe radial außerhalb der Verzahnung des wenigstens einen Hohlrades dieses ersten Teilgetriebes angeordnet sind.

3. Lastschaltgetriebe nach Anspruch 1, **dadurch gekennzeichnet, dass** das zweite Teilgetriebe ein (zweites) Planetengetriebe aufweist.

4. Lastschaltgetriebe nach Anspruch 1, **dadurch gekennzeichnet, dass** das erste Teilgetriebe eine erste Getriebeeingangswelle aufweist, an welcher ein über ein erstes Verbindungsteil nach radial außen gezogener erster hohlzylindrischer Fortsatz fest angeordnet ist, wobei an diesem ersten hohlzylindrischen Fortsatz zumindest eine Schiebemuffe für zumindest eine Gangkupplung des (ersten) Planetengetriebes axialbeweglich gehalten ist.

5. Lastschaltgetriebe nach Anspruch 3, **dadurch gekennzeichnet, dass** das zweite Teilgetriebe eine zweite Getriebeeingangswelle aufweist, an welcher ein über ein zweites Verbindungsteil nach radial außen gezogener zweiter hohlzylindrischer Fortsatz fest angeordnet ist, wobei an diesem zweiten hohlzylindrischen Fortsatz zumindest eine Schiebemuffe für zumindest eine Gangkupplung des (zweiten) Planetengetriebes axialbeweglich gehalten ist.

6. Lastschaltgetriebe für Kraftfahrzeuge mit
- einem ersten Teilgetriebe, das ein (erstes) Planetengetriebe aufweist;
- mehreren Gangkupplungen für das Ein- und Auslegen von Gängen im ersten Teilgetriebe;
- einem zweiten Teilgetriebe,
- mehreren Gangkupplungen für das Ein- und Auslegen von Gängen im zweiten Teilgetriebe; und
- einer Betätigungseinrichtung zum Betätigen der Gangkupplungen;
wobei das zweite Teilgetriebe parallel zum ersten Teilgetriebe geschaltet ist und wobei die Betätigungseinrichtung zumindest ein hohl ausgebildetes erstes Bauteil aufweist, das beweglich gelagert ist und sich um das (erste) Planetengetriebe des ersten Teilgetriebes herum erstreckt.

7. Lastschaltgetriebe nach Anspruch 6 **dadurch gekennzeichnet, dass** mittels dieses wenigstens einen hohl ausgebildeten ersten Bauteils wenigstens eine Gangkupplung für das Ein- und Auslegen von Gängen im ersten Teilgetriebe betätigbar ist.

8. Lastschaltgetriebe nach Anspruch 6 **dadurch gekennzeichnet, dass** das zweite Teilgetriebe ein (zweites) Planetengetriebe aufweist.

9. Lastschaltgetriebe nach Anspruch 6, **dadurch gekennzeichnet, dass** dieses hohl ausgebildete erste Bauteil eine (erste) Schaltwalze ist, die für die Betätigung sämtlicher Gangkupplungen des ersten Planetengetriebes auf ihrer Innenoberfläche mit einer Profilierung versehen ist.

10. Lastschaltgetriebe nach Anspruch 9, **dadurch gekennzeichnet, dass** die (erste) Schaltwalze drehbeweglich und axialfest gelagert ist.

11. Lastschaltgetriebe nach Anspruch 9, **dadurch gekennzeichnet, dass** die auf der Innenoberfläche der (ersten) Schaltwalze vorgesehene Profilierung von einer Vielzahl von Nuten gebildet wird.

12. Lastschaltgetriebe nach Anspruch 11, **dadurch gekennzeichnet, dass** die Nuten, die die auf der Innenoberfläche der (ersten) Schaltwalze vorgesehene Profilierung bilden, so angeordnet sind, dass in Umfangsrichtung der (ersten) Schaltwalze mehrere zueinander beabstandete Nuten vorgesehen sind und in Axialrichtung der (ersten) Schaltwalze mehrere zueinander beabstandete Nuten vorgesehen sind.

13. Lastschaltgetriebe nach Anspruch 6, **dadurch gekennzeichnet, dass** die Betätigungseinrichtung mehrere hohl ausgebildete erste Bauteile aufweist, die zylindrisch geformt sind und konzentrisch ineinander angeordnet sind und hydraulisch betätigbar sind,
wobei mittels dieser hohl ausgebildeten ersten Bauteile die Gangkupplungen des ersten Planetengetriebes betätigbar sind.

14. Lastschaltgetriebe nach Anspruch 8, **dadurch gekennzeichnet, dass** die Betätigungseinrichtung zumindest ein hohl ausgebildetes zweites Bauteil aufweist, mittels welchem wenigstens eine Gangkupplung für das Ein- und Auslegen von Gängen im zweiten Teilgetriebe betätigbar ist.

15. Lastschaltgetriebe nach Anspruch 14, **dadurch gekennzeichnet, dass** dieses hohl ausgebildete zweite Bauteil eine Schaltwalze ist, die auf ihrer Innenoberfläche mit einer Profilierung versehen ist.

16. Lastschaltgetriebe nach Anspruch 14, **dadurch gekennzeichnet, dass** die Betätigungseinrichtung mehrere hohl ausgebildete zweite Bauteile aufweist, die jeweils im Wesentlichen hohlzylindrisch ausgebildet sind und konzentrisch ineinander angeordnet sind und hydraulisch betätigbar sind, wobei mittels dieser hohl ausgebildeten zweiten Bauteile die Gangkupplungen des zweiten Planetengetriebes betätigbar sind.

17. Lastschaltgetriebe für Kraftfahrzeuge mit
- einem ersten Teilgetriebe;
- mehreren Gangkupplungen für das Ein- und Auslegen von Gängen im ersten Teilgetriebe;
- einem zweiten Teilgetriebe, das ein (zweites) Planetengetriebe aufweist,
- mehreren Gangkupplungen für das Ein- und Auslegen von Gängen im zweiten Teilgetriebe; und
- einer Betätigungseinrichtung zum Betätigen der Gangkupplungen;
wobei die Betätigungseinrichtung mehrere jeweils axial beweglich angeordnete dritte Bauteile aufweist, die in im Wesentlichen kreisförmiger Anordnung um das zweite Planetengetriebe herum angeordnet sind.

18. Lastschaltgetriebe für Kraftfahrzeuge mit
- einem ersten Teilgetriebe, das ein (erstes) Planetengetriebe aufweist;
- mehreren Gangkupplungen für das Ein- und Auslegen von Gängen im ersten Teilgetriebe;
- einem zweiten Teilgetriebe,
- mehreren Gangkupplungen für das Ein- und Auslegen von Gängen im zweiten Teilgetriebe; und
- einer Betätigungseinrichtung zum Betätigen der Gangkupplungen, wobei diese Betätigungseinrichtung genau einen Elektromotor aufweist;
wobei mittels dieses einen Elektromotors sämtliche Gangkupplungen für das Ein- und Auslegen von Gängen im ersten Teilgetriebe und im zweiten Teilgetriebe betätigbar sind.

19. Lastschaltgetriebe nach Anspruch 18, **dadurch gekennzeichnet, dass** dieser Elektromotor eine Elektromotorausgangswelle aufweist und zwischen dieser Elektromotorausgangswelle und diesen Gangkupplungen eine mechanische Kraftübertragungseinrichtung vorgesehen ist.

20. Lastschaltgetriebe nach Anspruch 19, **dadurch gekennzeichnet, dass** diese mechanische Kraftübertragungseinrichtung derart gestaltet ist, dass Bewegungen der Elektromotorausgangswelle für das Wählen von Gängen mit einer Übersetzung übersetzt werden, die von der jeweiligen Übersetzung abweicht die bei Bewegungen der Elektromotorausgangswelle für das Schalten von Gängen gegeben ist.

21. Lastschaltgetriebe für Kraftfahrzeuge mit einem ersten Teilgetriebe und einem zu diesem ersten Teilgetriebe parallel geschalteten zweiten Teilgetriebe, wobei das erste Teilgetriebe ein erstes Planetengetriebe mit einem ersten Hohlrad aufweist und wobei das zweite Teilgetriebe ein zweites Planetengetriebe mit einem zweiten Hohlrad aufweist, **dadurch gekennzeichnet, dass** dieses erste Hohlrad dieses ersten Planetengetriebes drehfest mit diesem zweiten Hohlrad dieses zweiten zweites Planetengetriebes verbunden ist.

22. Kraftfahrzeug-Getriebe mit
- mehreren Radsätzen zur Bildung von Gängen;
- mehreren Gangkupplungen für das Ein- und Auslegen von Gängen; und
- einer als Kupplung wirkenden Drehmomentübertragungseinrichtung,
wobei diese Drehmomentübertragungseinrichtung von einem Planetengetriebe und einer mit diesem Planetengetriebe zusammenwirkenden Bremseinrichtung gebildet wird.

23. Kraftfahrzeug-Getriebe nach Anspruch 22, **dadurch gekennzeichnet, dass** die als Kupplung wirkende Drehmomentübertragungseinrichtung, die von einem Planetengetriebe und einer mit diesem Planetengetriebe zusammenwirkenden Bremseinrichtung gebildet wird, ein erstes Bauteil aus einer Gruppe von Bauteilen dieses Planetengetriebes aufweist, welche Gruppe von einem Sonnenrad, einem Planetenträger und einem Hohlrad gebildet wird, wobei dieses erste Bauteil mit einem drehbeweglich angeordneten Eingangsteil verbunden ist, und ein zweites, vom ersten Bauteil verschiedenes Bauteil aus dieser Gruppe, das mit einem drehbeweglich angeordneten Ausgangsteil verbunden ist, und ein drittes, vom ersten und vom zweiten Bauteil verschiedenes Bauteil aus dieser Gruppe, das mit dieser Bremseinrichtung zusammenwirkt bzw. mit dieser Bremseinrichtung verbunden ist.

24. Kraftfahrzeug-Getriebe nach Anspruch 22, **dadurch gekennzeichnet, dass** eine erste, als Kupplung wirkende Drehmomentübertragungseinrichtung vorgesehen ist und eine zweite, als Kupplung wirkende Drehmomentübertragungseinrichtung , wobei zumindest eine dieser beiden Drehmomentübertragungseinrichtungen von einem Planetengetriebe und einer mit diesem Planetengetriebe zusammenwirkenden Bremseinrichtung gebildet wird.

25. Kraftfahrzeug-Getriebe nach Anspruch 24, **dadurch gekennzeichnet, dass** die erste Drehmomentübertragungseinrichtung von einem ersten Planetengetriebe und einer mit diesem ersten Planetengetriebe zusammenwirkenden, ersten Bremseinrichtung gebildet wird, und die zweite Drehmomentübertragungseinrichtung von einem zweiten Planetengetriebe und einer mit diesem zweiten Planetengetriebe zusammenwirkenden, zweiten Bremseinrichtung gebildet wird.

26. Kraftfahrzeug-Getriebe nach Anspruch 24, **dadurch gekennzeichnet, dass** das Kraftfahrzeug-Getriebe ein unterbrechungsfreies Schaltgetriebe ist, wobei die erste Drehmomentübertragungseinrichtung als Lastschaltkupplung und die zweite Drehmomentübertragungseinrichtung als Anfahrkupplung wirkt, und wobei die erste Drehmomentübertragungseinrichtung von einem Planetengetriebe und einer mit diesem Planetengetriebe zusammenwirkenden Bremseinrichtung gebildet wird.

27. Kraftfahrzeug-Getriebe nach Anspruch 24, **dadurch gekennzeichnet, dass** das Kraftfahrzeug-Getriebe ein Lastschaltgetriebe ist und aufweist:
- ein erstes Teilgetriebe für die Bildung von Gängen;
- mehrere erste Gangkupplungen für das Ein- und Auslegen von Gängen im ersten Teilgetriebe;
- ein zweites Teilgetriebe für die Bildung von Gängen;
- mehrere zweite Gangkupplungen für das Ein- und Auslegen von Gängen im zweiten Teilgetriebe;
wobei das zweite Teilgetriebe zum ersten Teilgetriebe parallel geschaltet ist;
die erste Drehmomentübertragungseinrichtung mit dem ersten Teilgetriebe gekoppelt ist; und wobei
die zweite Drehmomentübertragungseinrichtung mit dem zweiten Teilgetriebe gekoppelt ist.

28. Kraftfahrzeug-Antriebsstrang mit einer von einer Brennkraftmaschine antreibbaren Motorausgangswelle und mit wenigstens einer Antriebsachse sowie mit einer zwischen dieser Motorausgangswelle und dieser Antriebsachse angeordneten Getriebeeinrichtung, mittels welcher die Übersetzung zwischen dieser Motorausgangswelle und dieser Antriebsachse veränderbar ist, **dadurch gekennzeichnet, dass** die Getriebeeinrichtung gemäß einem der vorangehenden Ansprüche ausgebildet ist.
